# EUROPEAN PATENT SPECIFICATION

(11) **EP 4 472 265 B1**
(45) Date of publication and mention of the grant of the patent: **07.10.2026**
(21) Application number: 23760122.4
(22) Date of filing: 24.02.2023
(51) Int. Cl.: H04B 7/155

(54) **COMMUNICATION METHOD, CONTROL TERMINAL, AND BASE STATION**
KOMMUNIKATIONSVERFAHREN, STEUERUNGSENDGERÄT UND BASISSTATION
PROCÉDÉ DE COMMUNICATION, TERMINAL DE COMMANDE, ET STATION DE BASE

(30) Priority: 28.02.2022 JP 2022030325
(43) Date of publication of application: 04.12.2024
(73) Proprietor: Kyocera Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2023/006831
(87) International publication number: WO 2023/163124

(56) References cited:
- JP-A- 2017 527 203
- US-A1- 2022 045 746
- QUALCOMM: "NR Smart Repeaters for Rel-18", vol. TSG RAN, no. Electronic Meeting; 20210628 - 20210702, 7 June 2021 (2021-06-07), XP052025586, Retrieved from the Internet <URL:https://ftp.3gpp.org/tsg_ran/TSG_RAN/TSGR_AHs/2021_06_RAN_Rel18_WS/Docs/RWS-210019.zip RWS-210019 Smart Repeaters QCOM.pdf> [retrieved on 20210607]
- QUALCOMM: "NR Smart Repeaters for Rel-18", 3GPP DRAFT; RWS-210019, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Electronic Meeting; 20210628 - 20210702, 7 June 2021 (2021-06-07), Mobile Competence Centre ; 650, route des Lucioles ; F-06921 Sophia-Antipolis Cedex ; France , XP052025586
- RAN1 CHAIR (SAMSUNG): "Moderator's summary for discussion on [RAN94e-R18Prep-03] Additional topological improvements - smart repeater", 3GPP DRAFT; RP-212663, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Electronic Meeting; 20211206 - 20211217, 1 November 2021 (2021-11-01), Mobile Competence Centre ; 650, route des Lucioles ; F-06921 Sophia-Antipolis Cedex ; France, XP052073234
- RAN VICE-CHAIR (DEUTSCHE TELEKOM): "Email discussion summary for [RAN-R18-WS-eMBB-Overall]", 3GPP DRAFT; RWS-210654, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Electronic Meeting; 20210628 - 20210702, 1 July 2021 (2021-07-01), Mobile Competence Centre ; 650, route des Lucioles ; F-06921 Sophia-Antipolis Cedex ; France , XP052030339

## Description

### TECHNICAL FIELD

The present disclosure relates to a communication method, a control terminal, a base station used in a mobile communication system, a computer program, a chip set, and a system.

### BACKGROUND

In recent years, a mobile communication system of the fifth generation (5G) has been attracting attention. New Radio (NR), which is a radio access technology of the 5G system, is capable of wide-band transmission via a high frequency band as opposed to Long Term Evolution (LTE), which is a fourth-generation radio access technology.

Since radio waves in the high frequency band such as a millimeter wave band or a terahertz wave band have high rectilinearity, reduction of coverage of a base station is a problem. In order to solve such a problem, a repeater apparatus is attracting attention that is a kind of relay apparatuses relaying radio waves between a base station and a user equipment, and can be controlled from a network (see, for example, Non-Patent Document 1). Such a repeater apparatus can extend the coverage of the base station while suppressing occurrence of interference by, for example, amplifying a radio wave received from the base station and transmitting the radio wave through directional transmission.

### CITATION LIST

### NON-PATENT LITERATURE

Non-Patent Document 1: 3GPP Contribution: RP-213700, "New SI: Study on NR Network-controlled Repeaters"
QUALCOMM: "NR Smart Repeaters for Rel-18", 3GPP DRAFT; RWS-210019, vol. TSG RAN, no. Electronic Meeting; 20210628 - 20210702 7 June 2021 (2021-06-07) discloses NR smart repeaters in wireless communication systems and US 2022/045746 A1 discloses reporting repeaters in wireless communication systems.

### SUMMARY

The present invention provides a communication method according to claim 1, a control terminal according to claim 5, a base station according to claim 6, a computer program according to claim 7, a chip set according to claim 8, and a system according to claim 9. Preferred embodiments are described in the dependent claims.

### BRIEF DESCRIPTION OF THE DRAWINGS

FIG. 1 is a diagram illustrating a configuration of a mobile communication system according to an embodiment.
FIG. 2 is a diagram illustrating a configuration of a protocol stack of a radio interface of a user plane handling data.
FIG. 3 is a diagram illustrating a configuration of a protocol stack of a radio interface of a control plane handling signaling (control signal).
FIG. 4 is a diagram illustrating an application scenario for an NCR apparatus (relay apparatus) according to the embodiment.
FIG. 5 is a diagram illustrating an application scenario for the NCR apparatus according to the embodiment.
FIG. 6 is a diagram illustrating a configuration example of a protocol stack in the mobile communication system that includes the NCR apparatus and an NCR-UE (control terminal) according to the embodiment.
FIG. 7 is a diagram illustrating configuration examples of the NCR-UE and the NCR apparatus according to the embodiment.
FIG. 8 is a diagram illustrating a configuration example of a gNB (base station) according to the embodiment.
FIG. 9 is a diagram illustrating an example of downlink signaling from the gNB to the NCR-UE according to the embodiment.
FIG. 10 is a diagram illustrating an example of an NCR control signal according to the embodiment.
FIG. 11 is a diagram illustrating an example of uplink signaling from the NCR-UE to the gNB according to the embodiment.
FIG. 12 is a diagram illustrating an example of NCR capability information according to the embodiment.
FIG. 13 is a diagram illustrating an example of an operation of the mobile communication system according to the embodiment.
FIG. 14 is a diagram illustrating an example of an NCR control signal timing and an NCR control application timing according to the embodiment.
FIG. 15 is a diagram illustrating an operation example related to the NCR control signal timing and the NCR control application timing according to the embodiment.
FIG. 16 is a diagram illustrating an operation example related to a control ID according to the embodiment.
FIG. 17 is a diagram illustrating an operation example related to the control ID according to the embodiment.
FIG. 18 is a diagram illustrating an operation example related to an RNTI according to the embodiment.
FIG. 19 is a diagram illustrating an application scenario for an RIS apparatus (relay apparatus) according to a variation of the embodiment.
FIG. 20 is a diagram illustrating an application scenario for the RIS apparatus according to the variation of the embodiment.
FIG. 21 is a diagram illustrating an application scenario for the RIS apparatus according to the variation of the embodiment.
FIG. 22 is a diagram illustrating a configuration of an RIS-UE (control terminal) and the RIS apparatus according to the embodiment.
FIG. 23 is a diagram illustrating an operation according to the variation of the embodiment.
FIG. 24 is a diagram illustrating an example of an RIS control signal according to the variation of the embodiment.

### DESCRIPTION OF EMBODIMENTS

When a relay apparatus such as a repeater apparatus is controlled from a network, a control technique for specifically controlling the relay apparatus has not yet been established, and efficient coverage extension is currently difficult to perform using the relay apparatus.

The present disclosure provides appropriate control to control a relay apparatus that relays radio waves between a base station and a user equipment.

A mobile communication system according to an embodiment is described with reference to the drawings. In the description of the drawings, the same or similar parts are denoted by the same or similar reference signs.

### (1) Configuration of Mobile Communication System

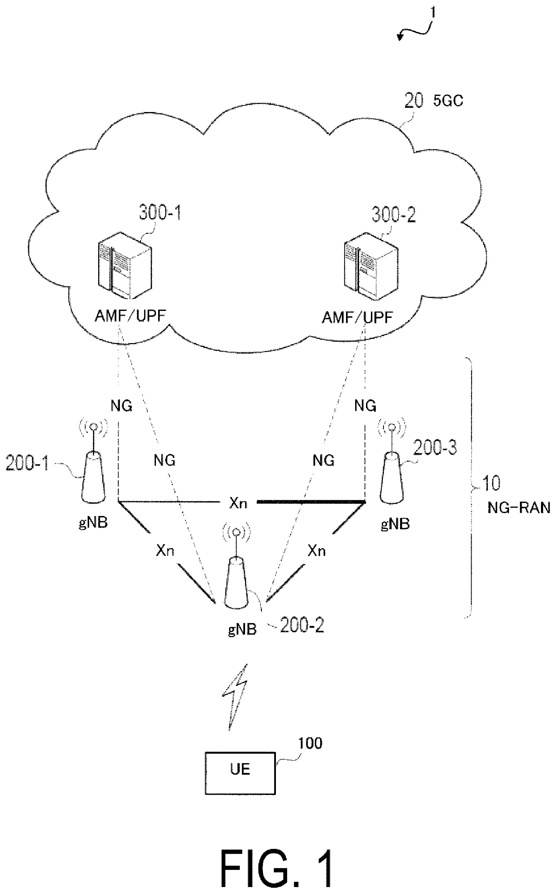

FIG. 1 is a diagram illustrating a configuration of a mobile communication system according to an embodiment. The mobile communication system 1 complies with the 5th Generation System (5GS) of the 3GPP standard. The description below takes the 5GS as an example, but Long Term Evolution (LTE) system may be at least partially applied to the mobile communication system. A sixth generation (6G) system may be at least partially applied to the mobile communication system.

The mobile communication system 1 includes a User Equipment (UE) 100, a 5G radio access network (Next Generation Radio Access Network (NG-RAN)) 10, and a 5G Core Network (5GC) 20. The NG-RAN 10 may be hereinafter simply referred to as a RAN 10. The 5GC 20 may be simply referred to as a core network (CN) 20.

The UE 100 is a mobile wireless communication apparatus. The UE 100 may be any apparatus as long as the UE 100 is used by a user. Examples of the UE 100 include a mobile phone terminal (including a smartphone), a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter simply referred to as one "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

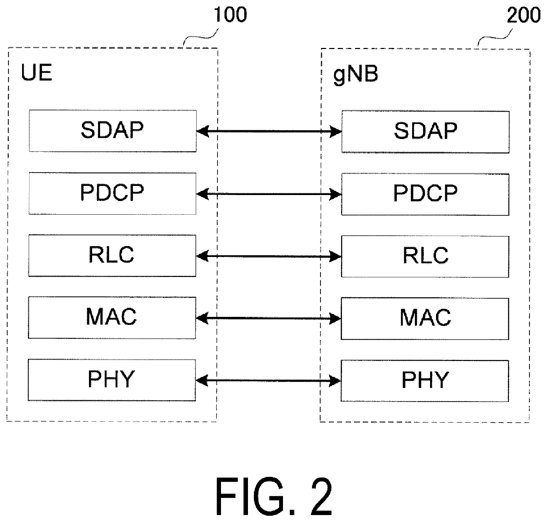

FIG. 2 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 performs blind decoding of the PDCCH using a radio network temporary identifier (RNTI) and acquires successfully decoded DCI as DCI addressed to the UE 100. The DCI transmitted from the gNB 200 is appended with CRC parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

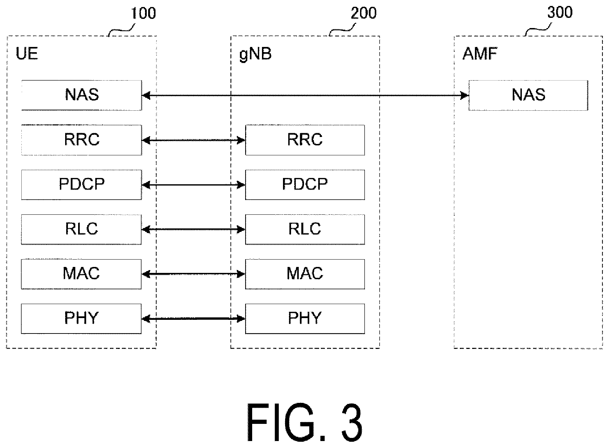

FIG. 3 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 2.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS layer which is positioned higher than the RRC layer performs session management, mobility management, and the like. NAS signalling is transmitted between the NAS layer of the UE 100 and the NAS layer of an AMF 300A. Note that the UE 100 includes an application layer other than the protocol of the radio interface. A layer lower than the NAS layer is referred to as an AS layer.

### (2) Application Scenario for Relay Apparatus

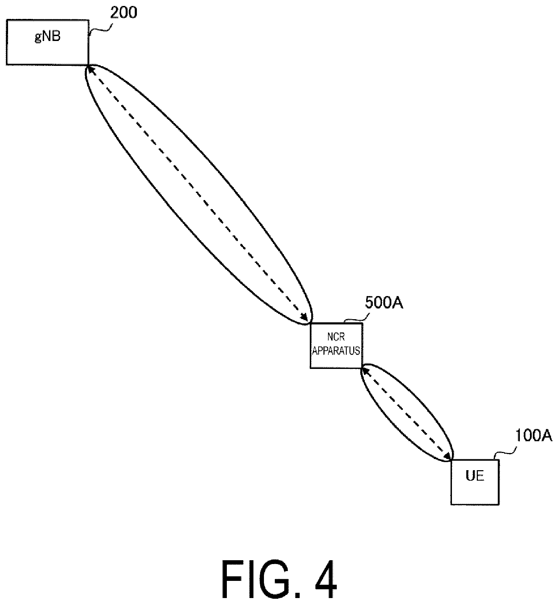

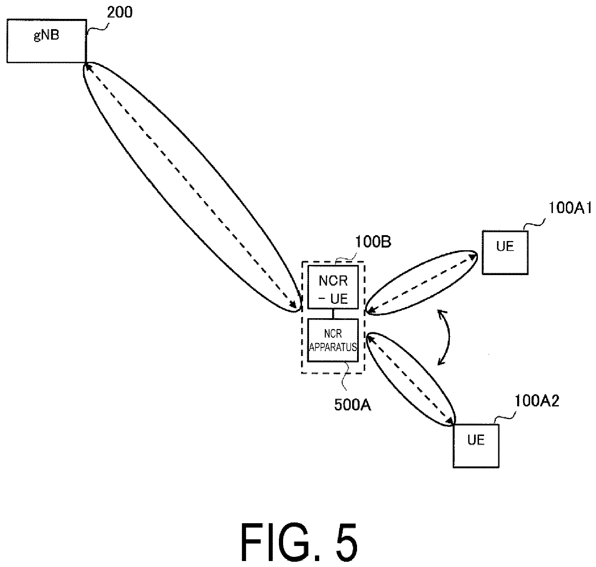

Application scenarios for an NCR apparatus are described that is the relay apparatus according to the embodiment. FIGs. 4 and 5 are diagrams illustrating the application scenarios for the NCR apparatus according to the embodiment.

The 5G/NR is capable of wide-band transmission via a high frequency band compared to the 4G/LTE. Since radio waves in the high frequency band such as a millimeter wave band or a terahertz wave band have high rectilinearity, a problem is reduction of coverage of the gNB 200. In FIG. 4, a UE 100A may be located outside a coverage area of the gNB 200, for example, outside an area where the UE 100A can receive radio waves directly from the gNB 200. The UE 100A may not communicate with the gNB 200 within a line of sight because of obstacles existing between the gNB 200 and the UE 100A.

In the embodiment, a repeater apparatus (500A) is a type of a relay apparatus relaying radio waves between the gNB 200 and the UE 100A, and can be controlled from the network. The repeater apparatus (500A) is introduced into the mobile communication system 1. Hereinafter, such a repeater apparatus is referred to as a Network-Controlled Repeater (NCR) apparatus. Such a repeater apparatus may be referred to as a smart repeater apparatus.

For example, the NCR apparatus 500A amplifies a radio wave (radio signal) received from the gNB 200 and transmits the radio wave through directional transmission. To be specific, the NCR apparatus 500A receives a radio signal transmitted by the gNB 200 through beamforming. The NCR apparatus 500A amplifies the received radio signal and transmits the amplified radio signal through the directional transmission. Here, the NCR apparatus 500A may transmit a radio signal with a fixed directivity. The NCR apparatus 500A may transmit a radio signal with a variable (adaptive) directional beam. This can efficiently extend the coverage of the gNB 200. Although in the embodiment, it is assumed that the NCR apparatus 500A is applied to downlink communication from the gNB 200 to the UE 100A, the NCR apparatus 500A can also be applied to uplink communication from the UE 100A to the gNB 200.

As illustrated in FIG. 5, a new UE (hereinafter referred to as an "NCR-UE") 100B is introduced that is a type of the control terminal for controlling the NCR apparatus 500A. The NCR-UE 100B controls the NCR apparatus 500A in cooperation with the gNB 200 by establishing a wireless connection to the gNB 200 and performing wireless communication to the gNB 200. By doing so, efficient coverage extension can be achieved using the NCR apparatus 500A. The NCR-UE 100B controls the NCR apparatus 500A in accordance with control from the gNB 200.

The NCR-UE 100B may be configured separately from the NCR apparatus 500A. For example, the NCR-UE 100B may be located near the NCR apparatus 500A and may be electrically connected to the NCR apparatus 500A. The NCR-UE 100B may be connected to the NCR apparatus 500A by wire or wireless. The NCR-UE 100B may be configured to be integrated with the NCR apparatus 500A. The NCR-UE 100B and the NCR apparatus 500A may be fixedly installed at a coverage edge (cell edge) of the base station 200, or on a wall surface or window of any building, for example. The NCR-UE 100B and the NCR apparatus 500A may be installed in, for example, a vehicle to be movable. One NCR-UE 100B may control a plurality of NCR apparatuses 500A.

In the example illustrated in FIG. 5, the NCR apparatus 500A dynamically or semi-statically changes a beam to be transmitted or received. For example, the NCR apparatus 500A forms a beam toward each of a UE 100A1 and a UE 100A2. The NCR apparatus 500A may also form a beam toward the gNB 200. For example, in a communication resource between the gNB 200 and the UE 100A1, the NCR apparatus 500A transmits a radio wave received from the gNB 200 toward the UE 100A1 through beamforming. And/or, the NCR apparatus 500A transmits a radio wave received from the UE 100A1 toward the gNB 200 through beamforming. In a communication resource between the gNB 200 and the UE 100A2, the NCR apparatus 500A transmits a radio wave received from the gNB 200 toward the UE 100A2 through beamforming. And/or, the NCR apparatus 500A transmits a radio wave received from the UE 100A2 toward the gNB 200 through beam forming. Instead of or in addition to the beamforming, the NCR apparatus 500A may perform null forming (so-called null steering) toward a UE 100 which is not a communication partner (not illustrated) and/or a neighboring gNB 200 (not illustrated) to suppress the interference. Hereinafter, a beam (beamforming) may be interpreted as a null (null steering). A beam (beamforming) may be interpreted as a beam and a null (beamforming and null steering).

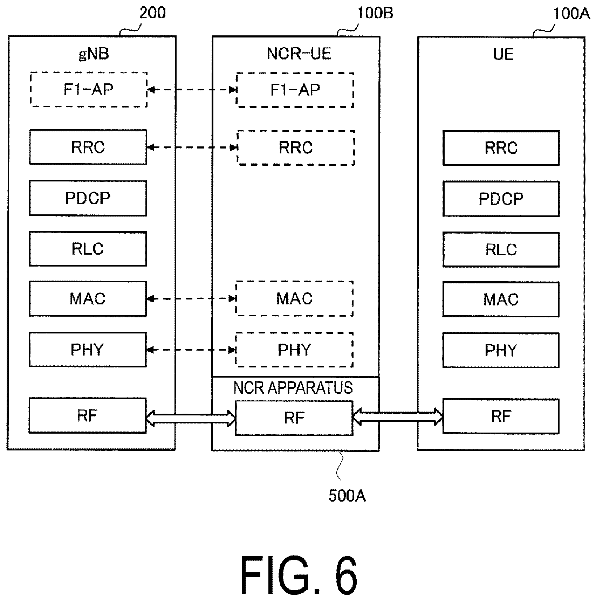

FIG. 6 is a diagram illustrating a configuration example of a protocol stack in the mobile communication system 1 that includes the NCR apparatus 500A and the NCR-UE 100B according to the embodiment.

As illustrated in FIG. 6, the NCR apparatus 500A relays radio signals transmitted and received between the gNB 200 and the UE 100A. The NCR apparatus 500A has a Radio Frequency (RF) function of amplifying and relaying a received radio signal, and performs directional transmission through beamforming (for example, analog beamforming).

The NCR-UE 100B includes at least one layer (entity) selected from the group consisting of PHY, MAC, RRC, and F1-Application Protocol (AP). The F1-AP is a type of a fronthaul interface. The NCR-UE 100B communicates downlink signaling and/or uplink signaling, which will be described below, with the gNB 200 through at least one selected from the group consisting of the PHY, the MAC, RRC, and the F1-AP. When the NCR-UE 100B is a type or a part of the base station, the NCR-UE 100B may communicate with the gNB 200 through an AP of Xn (Xn-AP) which is an inter-base station interface.

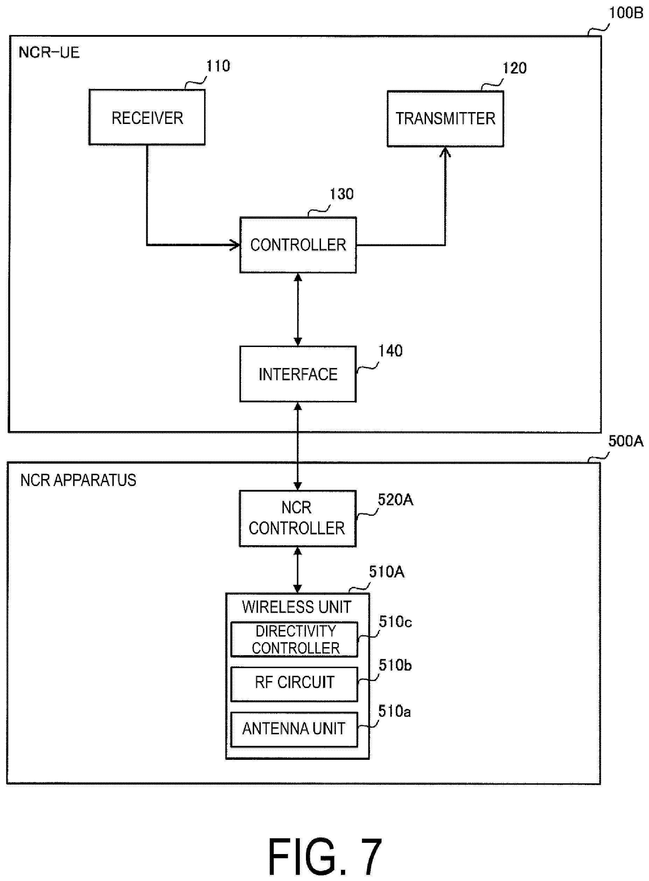

(3) Configuration Examples of Control Terminal and Relay Apparatus In the embodiment, configurations of the NCR-UE 100B (control terminal) and the NCR apparatus 500A are described. FIG. 7 is a diagram illustrating configuration examples of the NCR-UE 100B and the NCR apparatus 500A according to the embodiment.

As illustrated in FIG. 7, the NCR-UE 100B includes a receiver 110, a transmitter 120, a controller 130, and an interface 140.

The receiver 110 performs various types of reception under control of the controller 130. The receiver 110 includes an antenna and a reception device. The reception device converts a radio wave received through the antenna (radio signal) into a baseband signal (a reception signal) and outputs the resulting signal to the controller 130. The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control in the NCR-UE 100B. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing. The controller 130 performs a function of at least one layer selected from the group consisting of the PHY, the MAC, the RRC, and the F1-AP.

The interface 140 is electrically connected to the NCR apparatus 500A. The controller 130 controls the NCR apparatus 500A via the interface 140. Note that when the NCR-UE 100B is configured to be integrated with the NCR apparatus 500A, the NCR-UE 100B may not need to include the interface 140. The receiver 110 and the transmitter 120 of the NCR-UE 100B may be configured to be integrated with a wireless unit 510A of the NCR apparatus 500A.

The NCR apparatus 500A includes the wireless unit 510A and an NCR controller 520A. The wireless unit 510A includes an antenna unit 510a including a plurality of antennas, an RF circuit 510b including an amplifier, and a directivity controller 510c controlling directivity of the antenna unit 510a. The RF circuit 510b amplifies and relays (transmits) radio signals transmitted and received by the antenna unit 510a. The RF circuit 510b may convert a radio signal, which is an analog signal, into a digital signal, and may reconvert the digital signal into an analog signal after digital signal processing. The directivity controller 510c may perform analog beamforming by analog signal processing. The directivity controller 510c may perform digital beamforming by the digital signal processing. The directivity controller 510c may perform analog and digital hybrid beamforming.

The NCR controller 520A controls the wireless unit 510A in response to a control signal from the controller 130 of the NCR-UE 100B. The NCR controller 520A may include at least one processor. The NCR controller 520A may output information relating to a capability of the NCR apparatus 500A to the NCR-UE 100B. Note that when the NCR-UE 100B is configured to be integrated with the NCR apparatus 500A, the controller 130 of the NCR-UE 100B may also be configured to be integrated with the NCR controller 520A of the NCR apparatus 500A.

In the embodiment, the receiver 110 of the NCR-UE 100B receives signaling (downlink signaling) used to control the NCR apparatus 500A from the gNB 200 through wireless communication. The controller 130 of the NCR-UE 100B controls the NCR apparatus 500A based on the signaling. This enables the gNB 200 to control the NCR apparatus 500A via the NCR-UE 100B.

In the embodiment, the controller 130 of the NCR-UE 100B controls the NCR apparatus 500A. The controller 130 of the NCR-UE 100B acquires NCR capability information indicating the capability of the NCR apparatus 500A from the NCR apparatus 500A (NCR controller 520A). The transmitter 120 of the NCR-UE 100B transmits the acquired NCR capability information to the gNB 200 through wireless communication. The NCR capability information is an example of the uplink signaling from the NCR-UE 100B to the gNB 200. This enables the gNB 200 to grasp the capability of the NCR apparatus 500A.

### (4) Configuration Example of Base Station

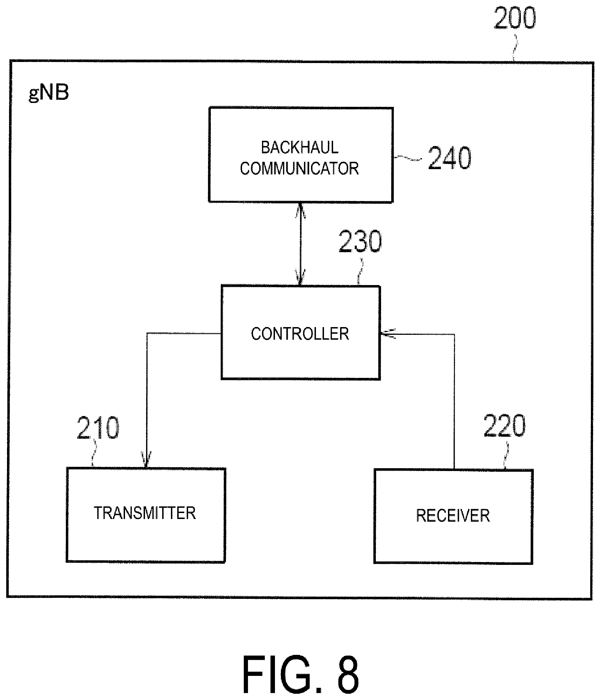

In the embodiment, a configuration of the gNB 200 (base station) is described. FIG. 8 is a diagram illustrating a configuration example of the gNB 200 according to the embodiment.

As illustrated in FIG. 8, the gNB 200 includes a transmitter 210, a receiver 220, a controller 230, and a backhaul communicator 240.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna. The receiver 220 performs various types of reception under control of the controller 230. The receiver 220 includes an antenna and a reception device. The reception device converts a radio signal received through the antenna into a baseband signal (a reception signal) and outputs the resulting signal to the controller 230. The transmitter 210 and the receiver 220 may be capable of beamforming using a plurality of antennas.

The controller 230 performs various types of controls for the gNB 200. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via the inter-base station interface. The backhaul communicator 240 is connected to the AMF/UPF 300 via the interface between a base station and the core network. Note that the gNB may include a Central Unit (CU) and a Distributed Unit (DU) (i.e., functions are divided), and both units may be connected via an F1 interface.

In the embodiment, the transmitter 210 of the gNB 200 transmits signaling (downlink signaling) used to control the NCR apparatus 500A to the NCR-UE 100B controlling the NCR apparatus 500A through wireless communication. This enables the gNB 200 to control the NCR apparatus 500A via the NCR-UE 100B.

In the embodiment, the receiver 220 of the gNB 200 receives the NCR capability information indicating the capability of the NCR apparatus 500A from the NCR-UE 100B controlling the NCR apparatus 500A through wireless communication. The NCR capability information is an example of the uplink signaling from the NCR-UE 100B to the gNB 200. This enables the gNB 200 to grasp the capability of the NCR apparatus 500A.

### (5) Operation of Mobile Communication System

In the embodiment, operations of the mobile communication system 1 are described.

### (5.1) Example of Downlink Signaling

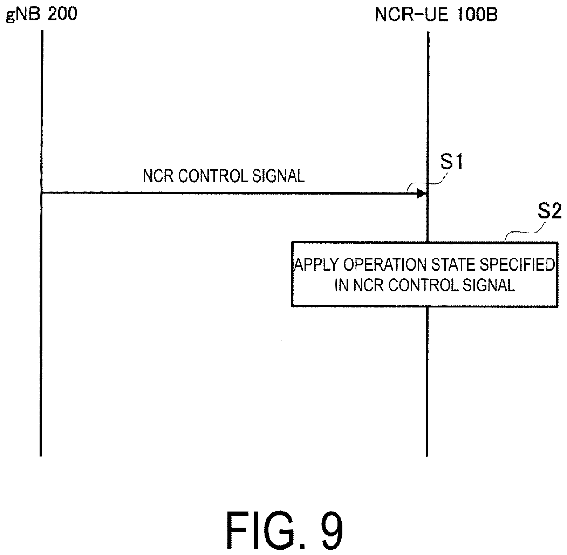

FIG. 9 is a diagram illustrating an example of the downlink signaling from the gNB 200 to the NCR-UE 100B according to the embodiment.

The gNB 200 (transmitter 210) transmits downlink signaling to the NCR-UE 100B. The downlink signaling may be an RRC message that is RRC layer (i.e., layer-3) signaling. The downlink signaling may be a MAC Control Element (CE) that is MAC layer (i.e., layer-2) signaling. The downlink signaling may be downlink control information (DCI) that is PHY layer (i.e., layer-1) signaling. The downlink signaling may be UE-specific signaling. The downlink signaling may be broadcast signaling. The downlink signaling may be a fronthaul message (for example, F1-AP message). When the NCR-UE 100B is a type or a part of the base station, the NCR-UE 100B may communicate with the gNB 200 through an AP of Xn (Xn-AP) which is an inter-base station interface.

For example, as illustrated in FIG. 9, the gNB 200 (transmitter 210) transmits an NCR control signal designating an operation state of the NCR apparatus 500A to the NCR-UE 100B having established a wireless connection to the gNB 200 (step S1). In the following embodiment, an example is mainly described in which the NCR control signal designating the operation state of the NCR apparatus 500A is a MAC CE that is MAC layer (layer-2) signaling or DCI that is PHY layer (layer-1) signaling. However, the NCR control signal may be included in an RRC Reconfiguration message that is a type of a UE-specific RRC message to transmit to the NCR-UE 100B. The downlink signaling may be a message of a layer (for example, an NCR application) higher than the RRC layer. The downlink signaling may be transmitting a message of a layer higher than the RRC layer encapsulated with a message of a layer equal to or lower than the RRC layer. Note that the NCR-UE 100B (transmitter 120) may transmit a response message with respect to the downlink signaling from the gNB 200 in the uplink. The response message may be transmitted in response to the NCR apparatus 500A completing the configuration designated in the downlink signaling or receiving the configuration.

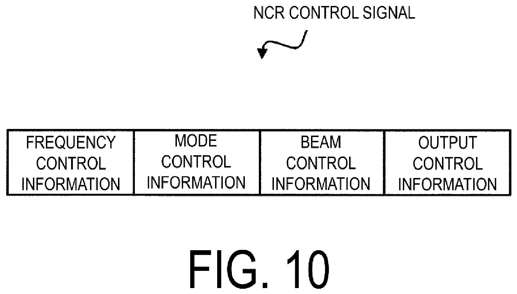

As illustrated in FIG. 10, the NCR control signal may include frequency control information to designate a center frequency of a radio wave (for example, a component carrier) to be relayed by the NCR apparatus 500A. When the NCR control signal received from the gNB 200 includes the frequency control information, the NCR-UE 100B (controller 130) controls the NCR apparatus 500A such that the NCR apparatus 500A relays a radio wave as a target whose center frequency is indicated by the frequency control information (step S2). The NCR control signal may include a plurality of pieces of frequency control information to designate center frequencies different from each other. Since the NCR control signal includes the frequency control information, the gNB 200 can designate the center frequency of the radio wave to be relayed by the NCR apparatus 500A via the NCR-UE 100B.

The NCR control signal may include mode control information to designate an operation mode of the NCR apparatus 500A. The mode control information may be associated with the frequency control information (center frequency). The operation mode may be any one of a mode in which the NCR apparatus 500A performs non-directional transmission and/or reception, a mode in which the NCR apparatus 500A performs fixed-directional transmission and/or reception, a mode in which the NCR apparatus 500A performs transmission and/or reception with a variable directional beam, and a mode in which the NCR apparatus 500A performs Multiple Input Multiple Output (MIMO) relay transmission. The operation mode may be either a beamforming mode (that is, a mode in which improvement of a desired wave is emphasized) and a null steering mode (that is, a mode in which suppression of an interference wave is emphasized). When the NCR control signal received from the gNB 200 includes the mode control information, the NCR-UE 100B (controller 130) controls the NCR apparatus 500A such that the NCR apparatus 500A operates in the operation mode indicated by the mode control information (step S2). Since the NCR control signal includes the mode control information, the gNB 200 can designate the operation mode of the NCR apparatus 500A via the NCR-UE 100B.

Here, the mode in which the NCR apparatus 500A performs non-directional transmission and/or reception is a mode in which the NCR apparatus 500A performs relay in all directions and may be referred to as an omnidirectional mode.

The mode in which the NCR apparatus 500A performs fixed-directional transmission and/or reception may be a directivity mode realized by one directional antenna. The mode for performing the transmission and/or reception may be a beamforming mode realized by applying fixed phase and amplitude control (antenna weight control) to a plurality of antennas. Any of these modes may be designated (configured) from the gNB 200 to the NCR-UE 100B.

The mode in which the NCR apparatus 500A performs transmission and/or reception with a variable directional beam may be a mode for performing analog beamforming. The mode for performing the transmission and/or reception may be a mode for performing digital beamforming. The mode for performing the transmission and/or reception may be a mode for performing hybrid beamforming. The mode may be a mode for forming an adaptive beam specific to a UE 100A. Any of these modes may be designated (configured) from the gNB 200 to the NCR-UE 100B.

Note that in the operation mode in which beamforming is performed, beam control information described below may be provided from the gNB 200 to the NCR-UE 100B.

The mode in which the NCR apparatus 500A performs MIMO relay transmission may be a mode for performing Single-User (SU) spatial multiplexing. The mode for performing the MIMO relay transmission may be a mode for performing Multi-User (MU) spatial multiplexing. The mode for performing the MIMO relay transmission may be a mode for performing transmission diversity. Any of these modes may be designated (configured) from the gNB 200 to the NCR-UE 100B.

The operation mode may include a mode in which relay transmission by the NCR apparatus 500A is turned on (activated) and a mode in which relay transmission by the NCR apparatus 500A is turned off (deactivated). Any of these modes may be designated (configured) from the gNB 200 to the NCR-UE 100B in the NCR control signal.

The NCR control signal may include the beam control information to designate a transmission direction, a transmission weight, or a beam pattern for the NCR apparatus 500A to perform directional transmission. The beam control information may be associated with the frequency control information (center frequency). The beam control information may include a Precoding Matrix Indicator (PMI). When the NCR control signal received from the gNB 200 includes the beam control information, the NCR-UE 100B (controller 130) controls the NCR apparatus 500A such that the NCR apparatus 500A forms a transmission directivity (beam) indicated by the beam control information (step S2). Since the NCR control signal includes the beam control information, the gNB 200 can control the transmission directivity of the NCR apparatus 500A via the NCR-UE 100B.

The NCR control signal may include output control information to designate a degree for the NCR apparatus 500A to amplify a radio wave (amplification gain) or transmission power. The output control information may be information indicating a difference value (that is, a relative value) between the current amplification gain or transmission power and the target amplification gain or transmission power. When the NCR control signal received from the gNB 200 includes the output control information, NCR-UE 100B (controller 130) controls the NCR apparatus 500A such that the NCR apparatus 500A changes the amplification gain or transmission power to that indicated by the output control information (step S2). The output control information may be associated with the frequency control information (center frequency). The output control information may be information to designate any one of an amplification gain, a beamforming gain, and an antenna gain of the NCR apparatus 500A. The output control information may be information to designate the transmission power of the NCR apparatus 500A.

When one NCR-UE 100B controls a plurality of NCR apparatuses 500, the gNB 200 (transmitter 210) may transmit the NCR control signal for respective one of the NCR apparatuses 500A to the NCR-UE 100B. In this case, the NCR control signal may include an identifier of the corresponding NCR apparatus 500A (NCR identifier). The NCR-UE 100B (controller 130) controlling the plurality of NCR apparatuses 500 determines the NCR apparatus 500A to which the NCR control signal is applied, based on the NCR identifier included in the NCR control signal received from the gNB 200. Note that the NCR identifier may be transmitted together with the NCR control signal from the gNB 200 to the NCR-UE 100B even when the NCR-UE 100B controls only one NCR apparatus 500A.

As described above, the NCR-UE 100B (controller 130) controls the NCR apparatus 500A based on the NCR control signal from the gNB 200. This enables the gNB 200 to control the NCR apparatus 500A via the NCR-UE 100B.

### (5.2) Example of Uplink Signaling

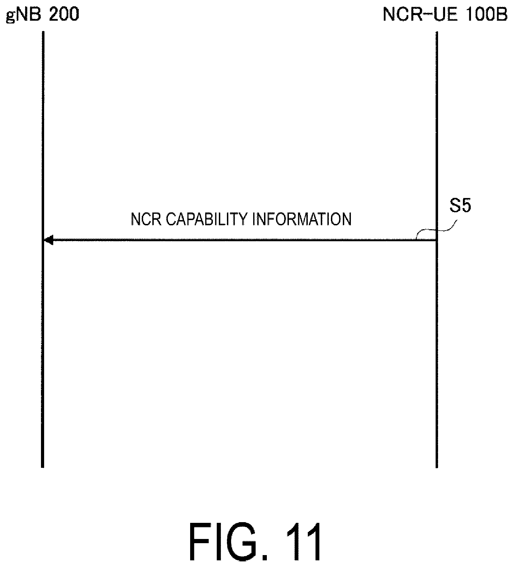

FIG. 11 is a diagram illustrating an example of the uplink signaling from the NCR-UE 100B to the gNB 200 according to the embodiment.

The NCR-UE 100B (transmitter 210) transmits uplink signaling to the gNB 200. The uplink signaling may be an RRC message that is RRC layer signaling. The uplink signaling may be a MAC CE that is MAC layer signaling. The uplink signaling may be uplink control information (UCI) that is PHY layer signaling. The uplink signaling may be a fronthaul message (for example, F1-AP message). The uplink signaling may be an inter-base station message (for example, Xn-AP message). The uplink signaling may be a message of a layer (for example, an NCR application) higher than the RRC layer. The uplink signaling may be transmitting a message of a layer higher than the RRC layer encapsulated with a message of a layer equal to or lower than the RRC layer. Note that the gNB 200 (transmitter 210) may transmit a response message with respect to the uplink signaling from the NCR-UE 100B in the downlink, and the NCR-UE 100B (receiver 110) may receive the response message.

For example, the NCR-UE 100B (transmitter 120) having established a wireless connection to the gNB 200 transmits the NCR capability information indicating the capability of the NCR apparatus 500A to the gNB 200 through wireless communication (step S5). The NCR-UE 100B (transmitter 120) may include the NCR capability information in a UE Capability message or a UE Assistant Information message that is a type of the RRC message to transmit to the gNB 200. The NCR-UE 100B (transmitter 120) may transmit the NCR capability information (NCR capability information and/or operation state information) to the gNB 200 in response to a request or inquiry from the gNB 200.

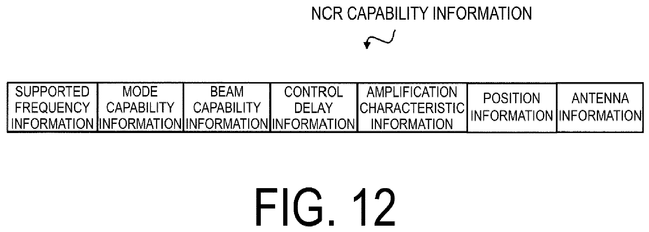

As illustrated in FIG. 12, the NCR capability information may include supported frequency information indicating a frequency supported by the NCR apparatus 500A. The supported frequency information may be a numerical value or index indicating a center frequency of the frequency supported by the NCR apparatus 500A. The supported frequency information may be a numerical value or index indicating a range of the frequencies supported by the NCR apparatus 500A. When the NCR capability information received from the NCR-UE 100B includes the supported frequency information, the gNB 200 (controller 230) can grasp the frequency supported by the NCR apparatus 500A, based on the supported frequency information. The gNB 200 (controller 230) may configure the center frequency of the radio wave targeted by the NCR apparatus 500A within the range of the frequencies supported by the NCR apparatus 500A.

The NCR capability information may include mode capability information relating to the operation modes or switching between the operation modes that can be supported by the NCR apparatus 500A. The operation mode may be, as described above, at least any one selected from the group consisting of a mode in which the NCR apparatus 500A performs non-directional transmission and/or reception, a mode in which the NCR apparatus 500A performs fixed-directional transmission and/or reception, a mode in which the NCR apparatus 500A performs transmission and/or reception with a variable directional beam, and a mode in which the NCR apparatus 500A performs Multiple Input Multiple Output (MIMO) relay transmission. The operation mode may be either a beamforming mode (that is, a mode in which improvement of a desired wave is emphasized) and a null steering mode (that is, a mode in which suppression of an interference wave is emphasized). The mode capability information may be information indicating which operation mode among these operation modes the NCR apparatus 500A can support. The mode capability information may be information indicating between which operation modes among these operation modes the mode switching is possible. When the NCR capability information received from the NCR-UE 100B includes the mode capability information, the gNB 200 (controller 230) can grasp the operation modes and mode switching supported by the NCR apparatus 500A, based on the mode capability information. The gNB 200 (controller 230) may configure the operation mode of the NCR apparatus 500A within a range of the grasped operation modes and mode switching.

The NCR capability information may include the beam capability information indicating a beam variable range, a beam variable resolution, or the number of variable patterns when the NCR apparatus 500A performs transmission and/or reception with a variable directional beam. The beam capability information may be, for example, information indicating a variable range of a beam angle with respect to the horizontal direction or the vertical direction (for example, control of 30° to 90° is possible). The beam capability information may be information indicating an absolute angle. The beam capability information may be represented by a direction and/or an elevation angle at which a beam is directed. The beam capability information may be information indicating an angular change for each variable step (for example, horizontal 5°/step, vertical 10 °/step). The beam capability information may be information indicating the number of variable steps (for example, horizontal 10 steps and vertical 20 steps). The beam capability information may be information indicating the number of variable patterns of a beam in the NCR apparatus 500A (for example, a total of 10 patterns of beam patterns 1 to 10). When the NCR capability information received from the NCR-UE 100B includes the beam capability information, the gNB 200 (controller 230) can grasp the beam angle change or beam patterns that can be supported by the NCR apparatus 500A, based on the beam capability information. The gNB 200 (controller 230) may configure a beam of the NCR apparatus 500A within a range of the grasped beam angular change or beam patterns. These pieces of beam capability information may be null capability information. For the null capability information, a null control capability when null steering is performed is indicated.

The NCR capability information may include control delay information indicating a control delay time in the NCR apparatus 500A. For example, the control delay information is information indicating a delay time (for example, 1 ms, 10 ms...) from a timing at which the UE 100 receives an NCR control signal or a timing at which the UE 100 transmits configuration completion for the NCR control signal to the gNB 200 until the UE 100 completes control (change of the operation mode or change of the beam) according to the NCR control signal. When the NCR capability information received from the NCR-UE 100B includes the control delay information, the gNB 200 (controller 230) can grasp the control delay time in the NCR apparatus 500A, based on the control delay information.

The NCR capability information may include amplification characteristic information relating to radio wave amplification characteristics or output power characteristics in the NCR apparatus 500A. The amplification characteristic information may be information indicating an amplifier gain (dB), a beamforming gain (dB), and an antenna gain (dBi) of the NCR apparatus 500A. The amplification characteristic information may be information indicating an amplification variable range (for example, 0 dB to 60 dB) in the NCR apparatus 500A. The amplification characteristic information may be information indicating the number of steps (for example, 10 steps) of the amplification degrees that can be changed by the NCR apparatus 500A or the amplification degree for each variable step (for example, 10 dB/step). The amplification characteristic information may be information indicating an output power variable range (for example, 0 dBm to 30 dBm) of the NCR apparatus 500A. The amplification characteristic information may be information indicating the number of steps (for example, 10 steps) of the output power that can be changed by the NCR apparatus 500A or the output power for each variable step (for example, 10 dBm/step).

The NCR capability information may include position information indicating an installation location of the NCR apparatus 500A. The position information may include any one or more of latitude, longitude, and altitude. The position information may include information indicating a distance and/or an installation angle of the NCR apparatus 500A with respect to the gNB 200. The installation angle may be a relative angle with respect to the gNB 200, or a relative angle with respect to, for example, north, vertical, or horizontal. The installation location may be position information of a place where the antenna unit 510a of the NCR apparatus 500A is installed.

The NCR capability information may include antenna information indicating the number of antennas included in the NCR apparatus 500A. The antenna information may be information indicating the number of antenna ports included in the NCR apparatus 500A. The antenna information may be information indicating a degree of freedom of the directivity control (beam or null formation). The degree of freedom indicates how many beams can be formed (controlled) and is usually "(the number of antennas) - 1". For example, in the case of two antennas, the degree of freedom is one. In the case of two antennas, an 8-shaped beam pattern is formed, but the directivity control can be performed only in one direction, so that the degree of freedom is one.

When the NCR-UE 100B controls a plurality of NCR apparatuses 500, the NCR-UE 100B (transmitter 120) may transmit the NCR capability information for each NCR apparatus 500A to the gNB 200. In this case, the NCR capability information may include an identifier of the corresponding NCR apparatus 500A (NCR identifier). When the NCR-UE 100B controls a plurality of NCR apparatuses 500, the NCR-UE 100B (transmitter 120) may transmit information indicating the respective identifiers of the plurality of NCR apparatuses 500A and/or the number of the plurality of NCR apparatuses 500A. Note that the NCR identifier may be transmitted together with the NCR capability information from the NCR-UE 100B to the gNB 200 even when the NCR-UE 100B controls only one NCR apparatus 500A.

### (5.3) General Operation Example

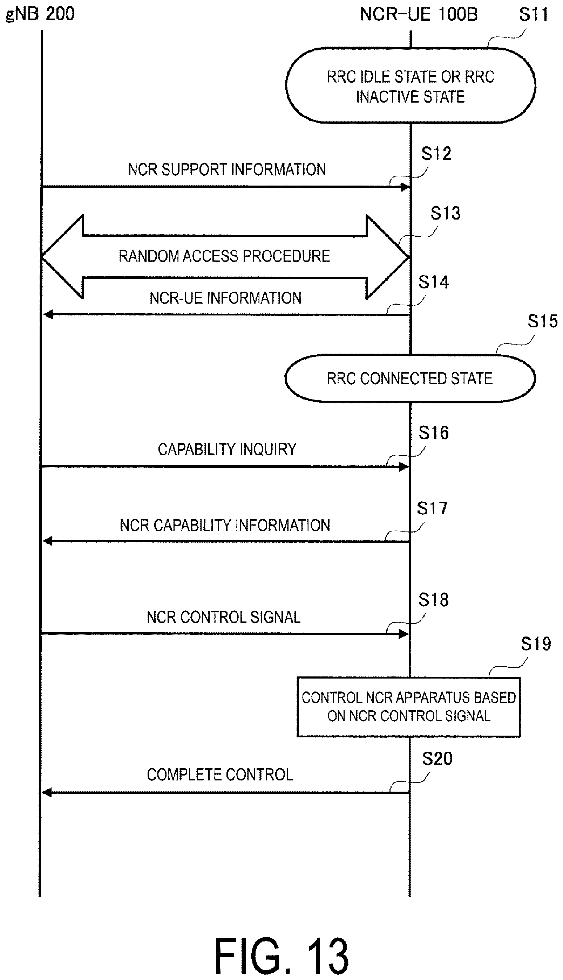

FIG. 13 is a diagram illustrating an example of an operation of the mobile communication system 1 according to the embodiment.

In step S11, the NCR-UE 100B is in the RRC idle state or the RRC inactive state.

In step S12, the gNB 200 (transmitter 210) broadcasts NCR support information indicating that the gNB 200 supports the NCR-UE 100B. For example, the gNB 200 (transmitter 210) broadcasts a system information block (SIB) including the NCR support information. The NCR support information may be information indicating that the NCR-UE 100B is accessible. The gNB 200 (transmitter 210) may broadcast NCR non-support information indicating that the gNB 200 does not support the NCR-UE 100B. The NCR non-support information may be information indicating that the NCR-UE 100B is inaccessible.

The NCR-UE 100B (controller 130) having not established a wireless connection to the gNB 200 may determine that access to the gNB 200 is permitted in response to receiving the NCR support information from the gNB 200, and may perform an access operation to establish a wireless connection to the gNB 200. The NCR-UE 100B (controller 130) may regard the gNB 200 (cell) to which access is permitted as the highest priority and perform cell reselection.

On the other hand, when the gNB 200 does not broadcast the NCR support information (or when the gNB 200 broadcasts the NCR non-support information), the NCR-UE 100B (controller 130) having not established a wireless connection to the gNB 200 may determine that access (connection establishment) to the gNB 200 is not possible. This enables the NCR-UE 100B to establish a wireless connection only to the gNB 200 capable of handling the NCR-UE 100B.

Note that when the gNB 200 is congested, the gNB 200 may broadcast access restriction information to restrict an access from the UE 100. However, unlike a normal UE 100, the NCR-UE 100B can be regarded as a network-side entity. Therefore, the NCR-UE 100B may ignore the access restriction information from the gNB 200. For example, the NCR-UE 100B (controller 130), when receiving the NCR support information from the gNB 200, may perform an operation to establish a wireless connection to the gNB 200 even if the gNB 200 broadcasts the access restriction information. For example, the NCR-UE 100B (controller 130) may not need to perform (or may ignore) Unified Access Control (UAC). Alternatively, any one or both of Access Category/Access Identity (AC/AI) used in the UAC may be a special value indicating that the access is made by the NCR-UE.

In step S13, the NCR-UE 100B (controller 130) starts a random access procedure for the gNB 200. In the random access procedure, the NCR-UE 100B (transmitter 120) transmits a random access preamble (Msg1) and an RRC message (Msg3) to the gNB 200. In the random access procedure, the NCR-UE 100B (receiver 110) receives a random access response (Msg2) and an RRC message (Msg4) from the gNB 200.

In step S14, the NCR-UE 100B (transmitter 120), when establishing a wireless connection to the gNB 200, may transmit NCR-UE information indicating that the NCR-UE 100B itself is an NCR-UE to the gNB 200. For example, the NCR-UE 100B (transmitter 120), during the random access procedure with the gNB 200, includes the NCR-UE information in the message (for example, Msg1, Msg3, Msg5) for the random access procedure to transmit to the gNB 200. The gNB 200 (controller 230) can recognize that the accessing UE 100 is the NCR-UE 100B, based on the NCR-UE information received from the NCR-UE 100B, and exclude from the access restriction target (in other words, accept the access from), for example, the NCR-UE 100B.

In step S15, the NCR-UE 100B transitions from the RRC idle state or the RRC inactive state to the RRC connected state.

In step S16, the gNB 200 (transmitter 120) transmits a capability inquiry message to inquire the capability of the NCR-UE 100B to the NCR-UE 100B. The NCR-UE 100B (receiver 110) receives the capability inquiry message.

In step S17 the NCR-UE 100B (transmitter 120) transmits a capability information message including the NCR capability information described above to the gNB 200. The gNB 200 (receiver 220) receives the capability information message. The gNB 200 (controller 230) grasps the capability of the NCR apparatus 500A based on the received capability information message.

In step S18, the gNB 200 (transmitter 120) transmits the NCR control signal designating the operation state of the NCR apparatus 500A to the NCR-UE 100B. The gNB 200 (transmitter 120) may transmit, as the NCR control signal, a MAC CE that is MAC-layer (layer-2) signaling or DCI that is PHY-layer (layer-1) signaling to the NCR- UE 100B. The NCR-UE 100B (receiver 110) receives the NCR control signal.

In step S19, the NCR-UE 100B (controller 130) controls the NCR apparatus 500A, based on the NCR control signal received from the gNB 200. The NCR-UE 100B (controller 130) may control the NCR apparatus 500A by notifying the NCR apparatus 500A (NCR controller 520A) of the NCR control signal received from the gNB 200.

In step S20, the NCR-UE 100B (transmitter 120), when completing the control of (configuration change) of the NCR apparatus 500A, may transmit a completion message to the gNB 200. Here, the NCR-UE 100B (controller 130) may determine the control completion, based on a notification (feedback) from the NCR apparatus 500A (NCR controller 520A). The gNB 200 (receiver 220) receives the completion message.

(5.4) NCR Control Signal Timing and NCR Control Application Timing As described above, the NCR-UE 100B (receiver 110) receives an NCR control signal as layer-1 or layer-2 signaling (hereinafter referred to as "L1/L2 signaling") from the gNB 200 wirelessly connected to the NCR apparatus 500A, the NCR control signal designating the operation state of the NCR apparatus 500A. The NCR-UE 100B (controller 130) controls the NCR apparatus 500A to apply the operation state designated by the NCR control signal to the NCR apparatus 500A. Here, a certain control delay occurs because the operation state of the NCR apparatus 500A is changed. For this reason, the NCR-UE 100B needs to receive the NCR control signal in a time period prior to a time period during which the operation state designated by the NCR control signal is applied. Therefore, the gNB 200 (transmitter 210) transmits the NCR control signal in a time period prior to a time period during which the operation state designated by the NCR control signal is applied.

Here, the time period may be a symbol (OFDM symbol), a slot, a subframe, or a frame. One subframe includes a plurality of OFDM symbols in the time domain. Note that the resource block, which is a unit for resource allocation, includes a plurality of OFDM symbols and a plurality of subcarriers. The frame may have 10 ms and may include 10 subframes each of which has 1 ms. The subframe may include slots the number of which corresponds to a subcarrier spacing. Hereinafter, a slot is described as an example of a time period, but the slot may be read as a symbol, a subframe, or a frame.

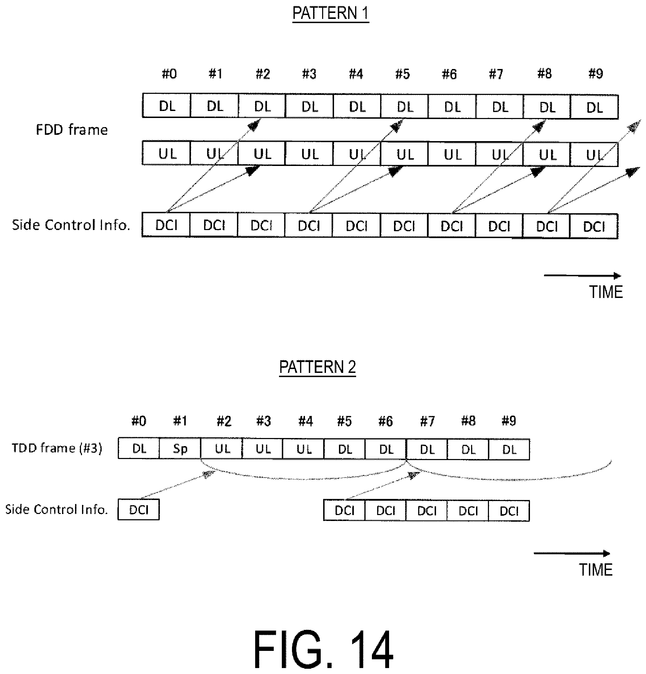

FIG. 14 is a diagram illustrating an example of an NCR control signal timing and an NCR control application timing. Here, an example is illustrated in which the NCR control signal is DCI. In an example of "pattern 1" in FIG. 14, a duplex scheme is Frequency Division Duplex (FDD), and in an example of "pattern 2" in FIG. 14, the duplex scheme is Time Division Duplex (TDD). Note that in FIG. 14, the NCR control signal is denoted by "Side Control Info.", the downlink is denoted by "DL", and the uplink is denoted by "UL".

As illustrated in "pattern 1" in FIG. 14, the gNB 200 (transmitter 210) transmits the NCR control signal in a slot prior a slot during which the operation state designated by the DCI that is the NCR control signal is applied. Here, assume that the NCR control signal (DCI) designates the operation state of the NCR apparatus 500A two slots later. To be more specific, the gNB 200 (transmitter 210) transmits the NCR control signal (DCI) in slot #0 prior to slot #2 during which the operation state designated by the NCR control signal (DCI) is applied. The gNB 200 (transmitter 210) also transmits the NCR control signal (DCI) in slot #3 prior to slot #5 during which the operation state designated by the NCR control signal (DCI) is applied. The gNB 200 (transmitter 210) transmits the NCR control signal (DCI) in slot #6 prior to slot #8 during which the operation state designated by the NCR control signal (DCI) is applied.

The gNB 200 (transmitter 210) may transmit, to the NCR-UE 100B, notification information (configuration information from the viewpoint of other than the gNB 200) indicating a time difference (that is, a time interval) between a reception slot (a transmission slot from the viewpoint of the gNB 200) during which the NCR-UE 100B receives the NCR control signal and an application slot during which the NCR-UE 100B applies the operation state designated by the NCR control signal. The notification information may be information indicating how many slots later after the NCR control signal is transmitted the control should be applied. The information is "2" in the example of "pattern 1" in FIG. 14. The notification information may be information indicating the number of slots between the reception slot (the transmission slot from the viewpoint of the gNB 200) and the application slot of the NCR control signal. The information is "1" in the example of "pattern 1" in FIG. 14.

For example, the NCR-UE 100B (receiver 110) receives the notification information from the gNB 200. The NCR-UE 100B (controller 130) specifies the application slot based on the reception slot and the notification information. The notification information may be information on the number of slots indicating a time interval between the reception slot and the application slot. The notification information may be information of a slot number of the application slot. The notification information may be included in an NCR control signal that is L1/L2 signaling. The notification information may be included in signaling of a layer higher than a layer of the L1/L2 signaling (hereinafter referred to as "higher layer signaling"). The higher layer signaling may be RRC signaling (RRC message).

However, the time difference between the reception slot (the transmission slot from the viewpoint of the gNB 200) during which the NCR-UE 100B receives the NCR control signal and the application slot during which the NCR-UE 100B applies the operation state designated by the NCR control signal to the NCR-UE 100B may be defined in advance in the technical specifications of the mobile communication system 1. In this case, the notification information is not necessary.

The NCR control signal may include information designating an operation state of the NCR apparatus 500A for each of the plurality of slots. In this case, the gNB 200 (transmitter 210) may transmit, to the NCR- UE 100B, notification information (configuration information from another viewpoint) for specifying the number of slots during each of which the operation state designated by the NCR control signal is applied.

For example, as illustrated in "pattern 2" in FIG. 14, the gNB 200 (transmitter 210) designates the operation state of NCR apparatus 500A for a total of five slots of consecutive slots #2 to #6 in the NCR control signal (DCI) transmitted in slot #0. In this case, the number of slots is "5" during each of which the operation state designated by the NCR control signal (DCI) transmitted in slot #0 is applied. The NCR control signal (DCI) transmitted in slot #0 may include information designating the same operation state for slots #2 to #6. The NCR control signal (DCI) may include information designating an individual operation state for each of slots #2 to #6.

Note that in the example of "pattern 2" in FIG. 14, the gNB 200 (transmitter 210) designates the operation state of the NCR apparatus 500A for slot #7 in the NCR control signal (DCI) transmitted in slot #5. The gNB 200 (transmitter 210) designates the operation state of the NCR apparatus 500A for slot #8 in the NCR control signal (DCI) transmitted in slot #6. The gNB 200 (transmitter 210) designates the operation state of the NCR apparatus 500A for slot #9 in the NCR control signal (DCI) transmitted in slot #7.

The notification information for specifying the number of slots during each of which the operation state designated by the NCR control signal is applied may be included in the NCR control signal that is L1/L2 signaling. The notification information may be included in higher layer signaling that is higher than the L1/L2 signaling. The higher layer signaling may be RRC signaling (RRC message). Hereinafter, an example is described in which the notification information is included in the higher layer signaling.

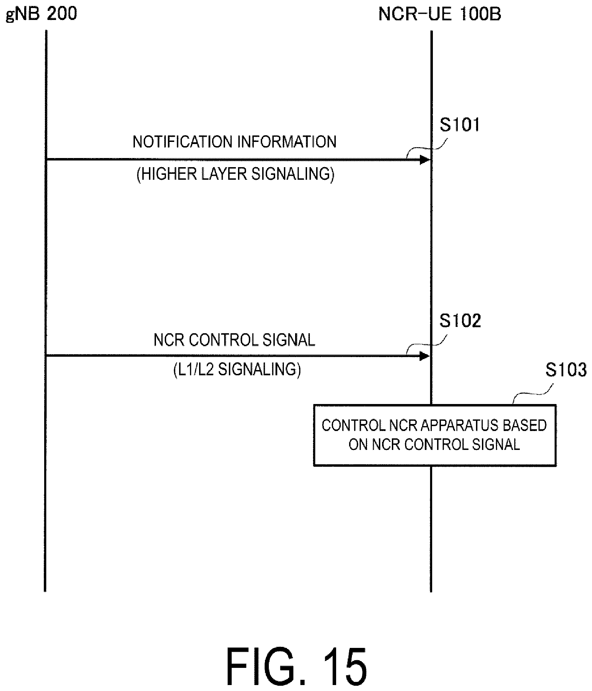

FIG. 15 is a diagram illustrating an operation example related to the NCR control signal timing and the NCR control application timing. Prior to such an operation, the NCR-UE 100B may notify the gNB 200 of control delay of the NCR-UE 100B by means of the above-mentioned NCR capability information.

In step S101, the gNB 200 (transmitter 210) transmits the above-described notification information to the NCR- UE 100B in the higher layer signaling. The NCR-UE 100B (receiver 110) receives the notification information. The NCR-UE 100B (controller 130) may specify, based on the notification information, the time difference between the reception slot during which the NCR control signal is received and the application slot during which the NCR-UE 100B applies the operation state designated by the NCR control signal to the NCR-UE 100B. The NCR-UE 100B (controller 130) may specify the number of slots during each of which the operation state designated by the NCR control signal is applied, based on the notification information.

In step S102, the gNB 200 (transmitter 210) transmits the above-described NCR control signal to the NCR- UE 100B in the L1/L2 signaling. The NCR-UE 100B (receiver 110) receives the NCR control signal. The NCR-UE 100B (controller 130) specifies one or more of slots during each which the operation state designated in the NCR control signal received in step S102 is to be applied to the NCR apparatus 500A based on the notification information received in step S101.

In step S103, the NCR-UE 100B (controller 130) controls the NCR apparatus 500A to apply the operation state designated in the NCR control signal received in step S102 to the NCR apparatus 500A during the slot(s) specified based on the notification information received in step S101. This changes the operation state of the NCR apparatus 500A during the specified slot(s).

In this example, the slot during which the operation state (control state) designated in the NCR control signal is applied is strictly defined, but the present disclosure is not limited thereto. The NCR-UE 100B may control the NCR apparatus 500A in response to receiving the NCR control signal and hold the current operation state until receiving the next NCR control signal (or until a control timing of the NCR apparatus 500A in response to the next NCR control signal). For example, in "pattern 1" in FIG. 14, in response to the NCR control signal received in slot #0, control of the NCR apparatus 500A is completed before slot #2 starts. Thereafter, the NCR-UE 100B holds the operation state as long as it receives no NCR control signal. When the next NCR control signal is received in slot #3, the control of the NCR apparatus 500A is completed before slot #5 starts.
When the NCR control signal is expected to be transmitted in the L1/L2 signaling, since a message size of the L1/L2 signaling is small, the NCR control signal is difficult to include the information designating the operation state of the NCR apparatus 500A. Therefore, an identifier (hereinafter referred to as a "control ID") is configured for each operation state of the NCR apparatus 500A in higher layer signaling, and the control ID is designated in the NCR control signal (L1/L2 signaling).

That is, the gNB 200 transmits association information associating the operation state of the NCR apparatus 500A with the control ID to the NCR-UE 100B in the higher layer signaling. The NCR-UE 100B receives the association information. Thereafter, upon receiving the NCR control signal including the control ID from the gNB 200 in the L1/L2 signaling, the NCR-UE 100B specifies the operation state corresponding to the control ID included in the received NCR control signal based on the association information received in the higher layer signaling. The NCR-UE 100B then controls the NCR apparatus 500A to apply the specified operation state to the NCR apparatus 500A.

Here, the operation state of the NCR apparatus 500A may be a transmission direction, a transmission weight, or a beam pattern designated in the beam control information described above. In this case, for example, the control ID may be assigned to each set of transmission weights (PMI). The operation state of the NCR apparatus 500A may be an operation mode designated in the above-described mode control information. In this case, for example, the control ID may be assigned to each operation mode. The operation state of the NCR apparatus 500A may be the transmission power designated in the above-described output control information. In this case, for example, the control ID may be assigned to each absolute value or each relative value of the transmission power.

When the NCR control signal is DCI, a different DCI format or a different RNTI may be defined for each type (for example, beam control, mode control, output control) of the operation state of the NCR apparatus 500A. In this case, for example, the DCI including the control ID for beam control, the DCI including the control ID for mode control, and the DCI including the control ID for output control may have different DCI formats or different RNTIs. The NCR apparatus 500A can identify the type of the operation state designated by the DCI based on the DCI format or the RNTI applied to the received DCI. When different RNTIs are used, RNTIs such as a transmission power control RNTI, an antenna weight control RNTI, and a mode control RNTI may be defined.

When the NCR control signal is MAC CE (or may be DCI), a type ID may be defined for each type (for example, beam control, mode control, output control) of the operation state of the NCR apparatus 500A. In this case, the NCR control signal may include at least one set of a type ID and a control ID. The NCR apparatus 500A can specify the type of the operation state designated by the control ID associated with the type ID based on the type ID included in the received NCR control signal. Note that as described above, the NCR control signal may include the NCR identifier. In the NCR control signal, the control ID may be associated with the NCR identifier (and the type ID).

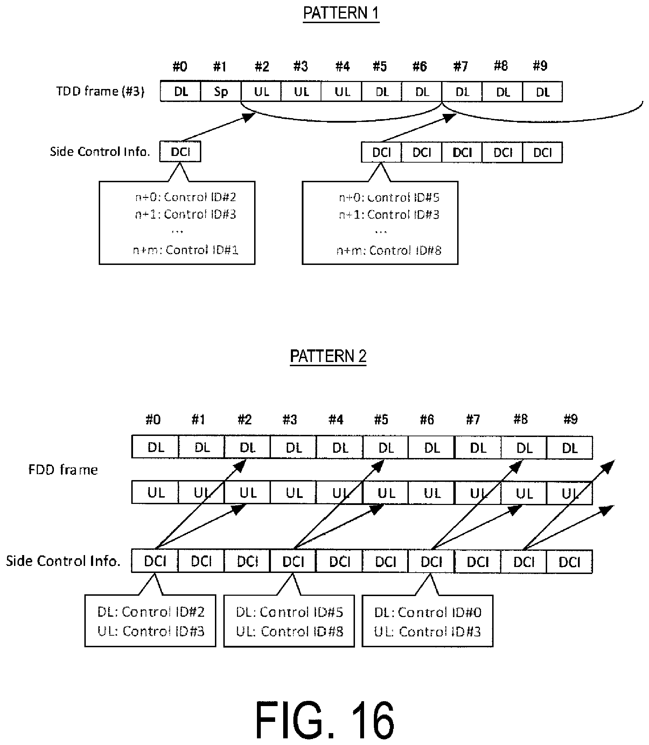

A notification of a plurality of control IDs may be transmitted in one NCR control signal. For example, the control ID indicating the transmission power 20 dBm and the control ID indicating the number PMI3 may be included in one NCR control signal. A notification of a plurality of control IDs of a plurality of slots may be transmitted in one NCR control signal. For example, as illustrated in "pattern 1" in FIG. 16, the gNB 200 (transmitter 210) includes the control IDs of the respective slots #2 to #6 in the NCR control signal (DCI) transmitted in slot #0.

A notification of a downlink control ID and an uplink control ID may be transmitted in one NCR control signal. For example, as illustrated in "pattern 2" in FIG. 16, the gNB 200 (transmitter 210) designates downlink control ID #2 and uplink control ID #3 to be applied during slot #2 in the NCR control signal (DCI) transmitted in slot #0.

The control ID is assigned to a combination of a plurality of operation states. In this case, for example, one control ID may be assigned to a combination of the transmission power 20 dBm and the number PMI3.

Note that the NCR control signal may include a value of the control ID itself. The NCR control signal may include a bitmap indicating the value of the control ID by a bit position. The bitmap includes, for example, a bit corresponding to control ID #0, a bit corresponding to control ID #1, and a bit corresponding to control ID #2. When the value of the bit is a specific value, the bitmap indicates that the corresponding control ID is applied.

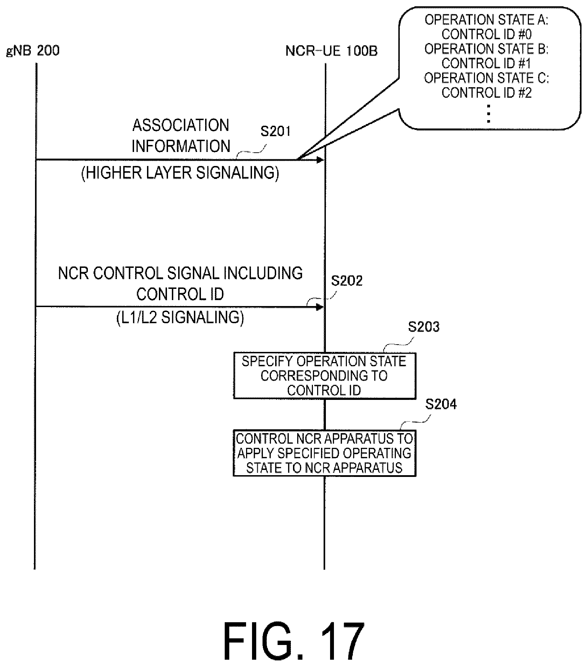

FIG. 17 is a diagram illustrating an operation example related to the control ID.

In step S201, the gNB 200 (transmitter 210) transmits the above-described association information to the NCR-UE 100B in the higher layer signaling. In the example in FIG. 17, control ID #0 is set for an operation state A of the NCR apparatus 500A, control ID #1 is set for an operation state B of the NCR apparatus 500A, and control ID #2 is set for an operation state C of the NCR apparatus 500A.

In step S202, the gNB 200 (transmitter 210) transmits the NCR control signal including the control ID to the NCR- UE 100B in the L1/L2 signaling. The NCR-UE 100B (receiver 110) receives the NCR control signal.

In step S203, the NCR- UE 100B (controller 130) specifies the operation state associated with the control ID included in the NCR control signal received in step S202 based on the association information received in step S201.

In step S204, the NCR-UE 100B (controller 130) controls the NCR apparatus 500A to apply the operation state specified in step S203 to the NCR apparatus 500A. This changes the operation state of the NCR apparatus 500A.

### (5.6) RNTI

When the NCR control signal is DCI, the NCR-UE 100B may receive DCI for controlling the operation of the NCR-UE 100B itself (hereinafter, referred to as "first DCI") and DCI for controlling the operation of the NCR apparatus 500A (hereinafter, referred to as second "DCI") from the gNB 200. When all these controls (the control of the NCR-UE 100B itself and the control of the NCR apparatus 500A) are performed using one RNTI, in particular, a C-RNTI (cell radio network temporary identifier), the control of the NCR-UE 100B may be complicated. The NCR-UE 100B may not be able to receive a plurality of pieces of DCI in the same slot. Therefore, in order for the NCR-UE 100B to be able to determine whether the DCI received from the gNB 200 is the first DCI or the second DCI, the RNTIs applied to the first DCI and the second DCI may be different.

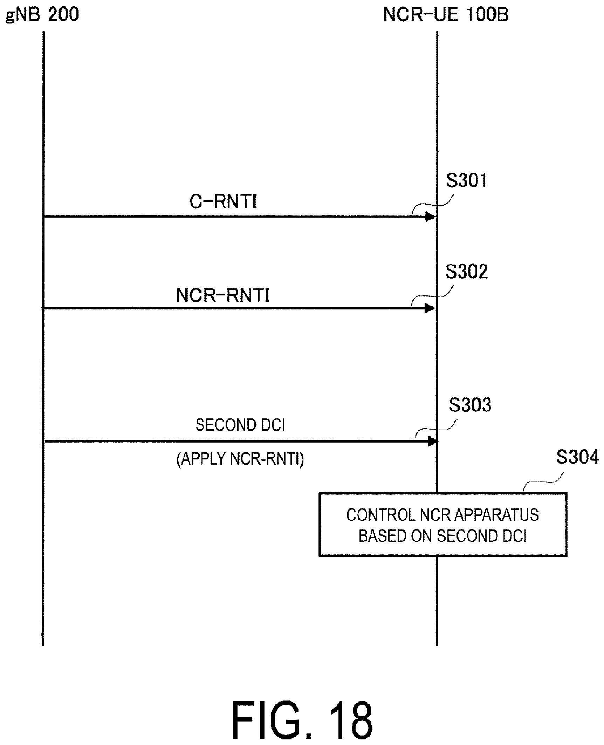

FIG. 18 is a diagram illustrating an operation example related to the RNTI.

In step S301, the gNB 200 (transmitter 210) transmits the C-RNTI assigned to the NCR-UE 100B to the NCR-UE 100B. The NCR-UE 100B (receiver 110) receives the C-RNTI. The C-RNTI is used to transmit the first DCI for controlling the operation of the NCR-UE 100B itself. The NCR-UE 100B starts blind decoding of a PDCCH using the received C-RNTI.

In step S302, the gNB 200 (transmitter 210) transmits the NCR-RNTI (that is, the NCR control RNTI) assigned to the NCR-UE 100B to the NCR-UE 100B. The NCR-UE 100B (receiver 110) receives the NCR-RNTI. The NCR-RNTI is used to transmit the second DCI for controlling the operation of the NCR apparatus 500A. The NCR-UE 100B starts blind decoding of a PDCCH using the received NCR-RNTI.

As a premise of step S302, the gNB 200 grasps that the NCR-UE 100B is the UE 100 that controls the NCR apparatus 500A. As described above, the NCR-UE 100B, when accessing the gNB 200, may provide a notification of the UE 100 to the gNB 200. The NCR-UE 100B may have been authenticated as the NCR-UE 100B by the gNB 200 or the core network.

When one NCR-UE 100B controls a plurality of NCR apparatuses 500A, a different NCR-RNTI may be assigned to each NCR apparatus 500A. In this case, the gNB 200 may notify the NCR-UE 100B of the association information between the identifier of the NCR apparatus 500A and the NCR-RNTI. As described above, the gNB 200 may be notified of the identifier of the NCR apparatus 500A from the NCR-UE 100B.

In step S303, the gNB 200 (the transmitter 210) applies the NCR-RNTI to the DCI (that is, second DCI) and transmits the DCI to the NCR-UE 100B. To be more specific, the gNB 200 (transmitter 210) transmits, on the PDCCH, the DCI to which a CRC parity bit scrambled with the NCR-RNTI is added.

In step S304, the NCR-UE 100B performs blind decoding of the PDCCH by using the NCR-RNTI, and acquires the successfully decoded DCI as the second DCI. The NCR-UE 100B (controller 130) controls the NCR apparatus 500A to apply the operation state designated in the second DCI to the NCR apparatus 500A. This changes the operation state of the NCR apparatus 500A.

### (6) Variation

The embodiment described above describes the example in which the relay apparatus relaying the radio waves between the gNB 200 and the UE 100 (UE 100A) is the NCR apparatus 500A that amplifies and transfers the received radio waves. On the other hand, in the variation, the relay apparatus relaying the radio waves between the gNB 200 and the UE 100 (UE 100A) is a Reconfigurable Intelligent Surface (RIS) apparatus that changes a propagation direction of an incident radio wave by reflection or refraction. The "NCR" in the above-described embodiments may be read as the "RIS".

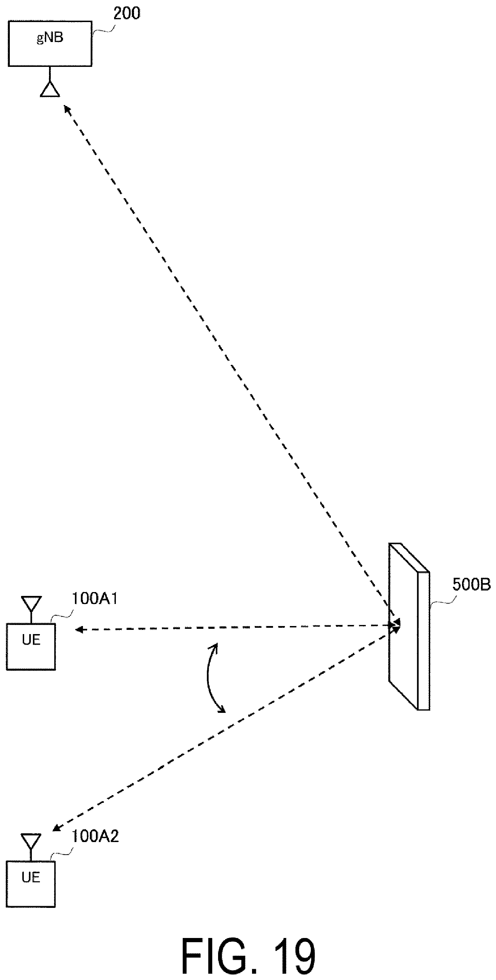

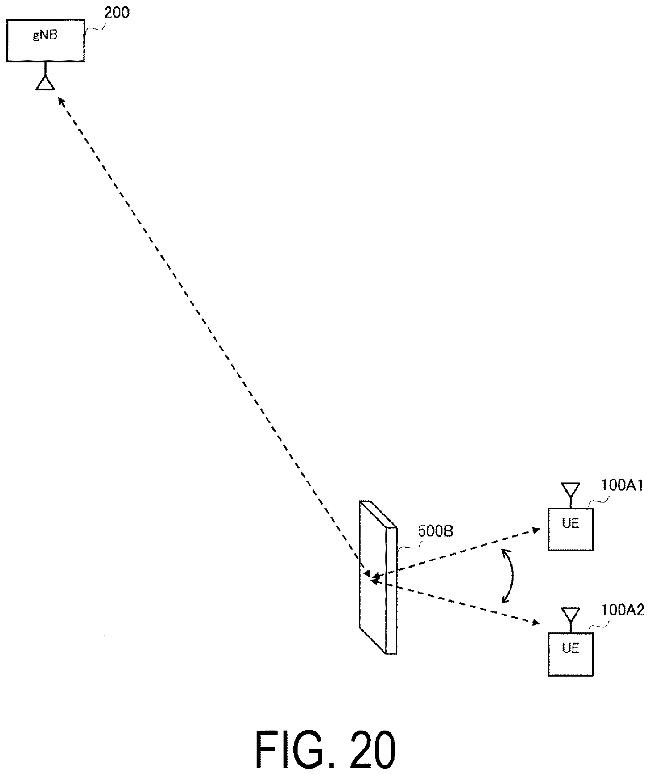

FIGs. 19 to 21 are diagrams illustrating an application scenario for the RIS apparatus according to the variation of the embodiment. In the variation, the RIS apparatus 500B using a metasurface technology is introduced into the mobile communication system 1. In the RIS apparatus 500B, the coverage of the gNB 200 can be efficiently extended by dynamically changing the propagation direction of the radio wave (beam) incident from the gNB 200 by reflection or refraction, for example. The RIS apparatus 500B has characteristics such as Reconfigurable, Dynamic (dynamically controllable), and Flexible (controllable in beam direction). Although FIGs. 19 and 20 illustrate examples in which the RIS apparatus 500B is applied to downlink communication from the gNB 200 to the UE 100A1 and the UE 100A2, the RIS apparatus 500B can also be applied to uplink communication from the UE 100A1 and the UE 100A2 to the gNB 200.

The RIS apparatus 500B illustrated in FIG. 19 is a reflective RIS apparatus 500B. Such an RIS apparatus 500B reflects an incident radio wave to change the propagation direction of the radio wave. Here, a reflection angle of the radio wave can be variably configured. The RIS apparatus 500B reflects radio waves incident from the gNB 200 toward each of the UE 100A1 and the UE 100A2. The RIS apparatus 500B may reflect a radio wave incident from each of the UE 100A1 and the UE 100A2 toward the gNB 200. The RIS apparatus 500B dynamically changes a reflection angle of a radio wave. For example, in a communication resource between the gNB 200 and the UE 100A1, the RIS apparatus 500B reflects a radio wave incident from the gNB 200 toward the UE 100A1 and/or reflects a radio wave incident from the UE 100A1 toward the gNB 200. Here, the communication resource includes a time direction resource and/or a frequency direction resource. In a communication resource between the gNB 200 and the UE 100A2, the RIS apparatus 500B reflects a radio wave incident from the gNB 200 toward the UE 100A2 and/or reflects a radio wave incident from the UE 100A2 toward the gNB 200.

The RIS apparatus 500B illustrated in FIG. 20 is a transmissive RIS apparatus 500B. Such an RIS apparatus 500B refracts an incident radio wave to change the propagation direction of the radio wave. Here, a refraction angle of the radio wave can be variably configured. The RIS apparatus 500B refracts radio waves incident from the gNB 200 toward each of the UE 100A1 and the UE 100A2. The RIS apparatus 500B may refract a radio wave incident from each of the UE 100A1 and the UE 100A2 toward the gNB 200. The RIS apparatus 500B dynamically changes the refraction angle of a radio wave. For example, in a communication resource between the gNB 200 and the UE 100A1, the RIS apparatus 500B refracts a radio wave incident from the gNB 200 toward the UE 100A1 and/or refracts a radio wave incident from the UE 100A1 toward the gNB 200. In a communication resource between the gNB 200 and the UE 100A2, the RIS apparatus 500B refracts a radio wave incident from the gNB 200 toward the UE 100A2 and/or refracts a radio wave incident from the UE 100A2 toward the gNB 200.

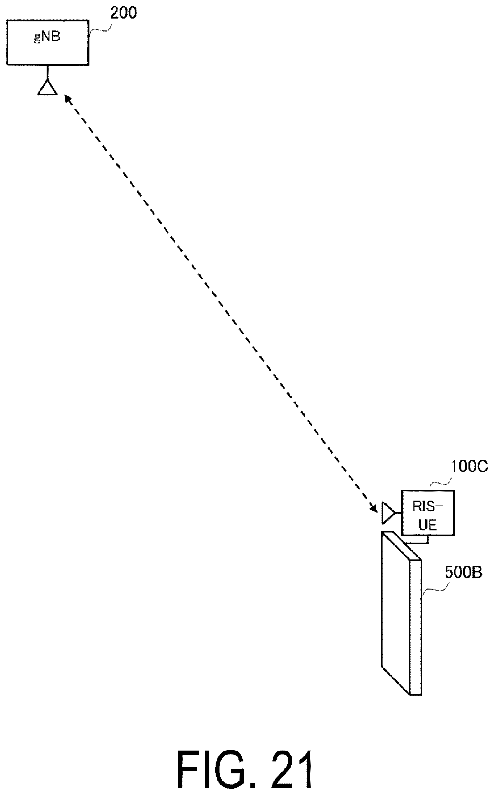

In the variation, as illustrated in FIG. 21, a new UE (hereinafter referred to as a "RIS-UE") 100C is introduced that is a type of the control terminal for controlling the RIS apparatus 500B. The RIS-UE 100C controls the RIS apparatus 500B in cooperation with the gNB 200 by establishing a wireless connection to the gNB 200 and performing wireless communication with the gNB 200. This can realize efficient coverage extension using the RIS apparatus 500B while suppressing the increase in the installation cost and the decrease in the degree of freedom of the installation of the RIS apparatus 500B. The RIS-UE 100C controls the RIS apparatus 500B in accordance with an RIS control signal from the gNB 200.

The RIS-UE 100C may be configured separately from the RIS apparatus 500B. For example, the RIS-UE 100C may be located near the RIS apparatus 500B and may be electrically connected to the RIS apparatus 500B. The RIS-UE 100C may be connected to the RIS apparatus 500B by wire or wireless. The RIS-UE 100C may be configured integrally with the RIS apparatus 500B. The RIS-UE 100C and the RIS apparatus 500B may be fixedly installed on a wall surface or a window, for example. The RIS-UE 100C and the RIS apparatus 500B may be installed in, for example, a vehicle to be movable. One RIS-UE 100C may control a plurality of RIS apparatuses 500B.

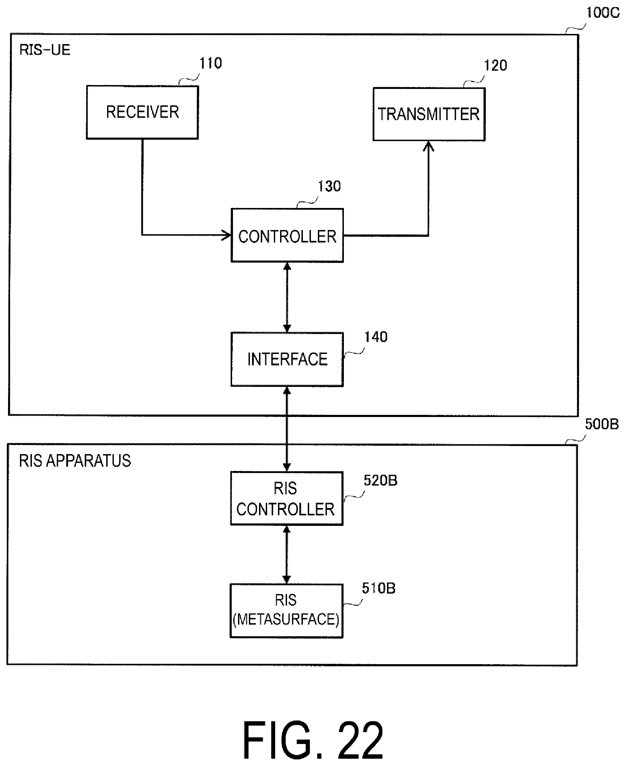

FIG. 22 is a diagram illustrating configurations of the RIS-UE 100C and the RIS apparatus 500B according to the embodiment.

As illustrated in FIG. 22, the RIS-UE 100C includes the receiver 110, the transmitter 120, the controller 130, and the interface 140. The configuration like this is the same as, and/or similar to, that in the embodiment described above.

The RIS apparatus 500B includes a RIS 510B and a RIS controller 520. The RIS 510B is a metasurface configured using metamaterials. For example, the RIS 510B is configured by arranging very small structures in an array form with respect to a wavelength of a radio wave, in which a direction and beam shape of a reflected wave can be arbitrarily designed by forming the structures in different shapes depending on an arrangement location. The RIS 510B may be a transparent dynamic metasurface. The RIS 510B may be configured by stacking a transparent glass substrate on a metasurface substrate on which a large number of small structures are regularly arranged and which is made transparent, and may be capable of dynamically controlling three patterns of a mode of transmitting an incident radio wave, a mode of transmitting a part of a radio wave and reflecting a part thereof, and a mode of reflecting all radio waves by minutely moving the stacked glass substrate.

The RIS controller 520B controls the RIS 510B in response to a RIS control signal from the controller 130 in the RIS-UE 100C. The RIS controller 520B may include at least one processor and at least one actuator. The processor interprets a RIS control signal from the controller 130 in the RIS-UE 100C to drive the actuator in response to the RIS control signal. Note that when the RIS-UE 100C and the RIS apparatus 500B are integrally configured, the controller 130 in the RIS-UE 100C and the RIS controller 520B in the RIS apparatus 500B may also be integrally configured.

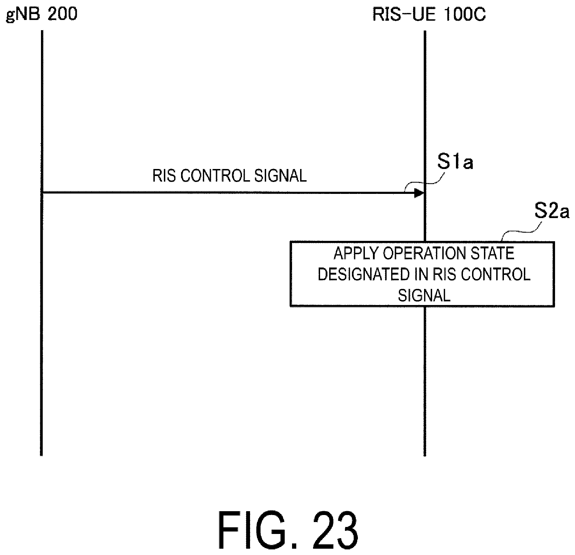

For example, as illustrated in FIG. 23, the gNB 200 (transmitter 210) transmits an RIS control signal designating an operation state of the RIS apparatus 500B to the RIS-UE 100C having established a wireless connection to the gNB 200 (step S1a). The RIS control signal designating the operation state of the RIS apparatus 500B may be MAC CE that is MAC layer (layer-2) signaling or DCI that is PHY layer (layer-1) signaling. The RIS-UE 100C (the controller 130) controls the RIS apparatus 500B to apply the operation state designated by the RIS control signal to the RIS apparatus 500B (step S2a).

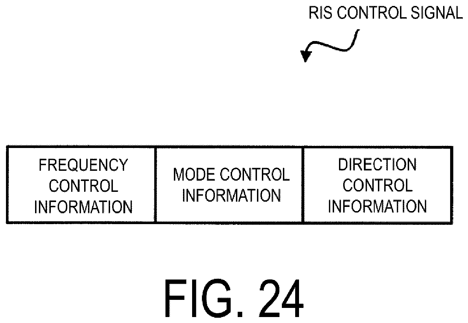

As illustrated in FIG. 24, the RIS control signal may include frequency control information to set a center frequency of a radio wave (for example, a component carrier) targeted by the RIS apparatus 500B. When the RIS control signal received from the gNB 200 includes the frequency control information, the RIS-UE 100C (controller 130) controls the RIS apparatus 500B such that the RIS apparatus 500B operates targeting (for example, reflects, transmits (refracts), or blocks) the radio wave at the center frequency indicated by the frequency control information. The RIS control signal may include a plurality of pieces of frequency control information to set center frequencies different from each other. Since the RIS control signal includes the frequency control information, the gNB 200 can designate the center frequency of the radio wave to be targeted by the RIS apparatus 500B via the RIS-UE 100C.

The RIS control signal may include mode control information to set an operation mode of the RIS apparatus 500B. The mode control information may be associated with the frequency control information (center frequency). The operation mode may be any one of a reflective mode in which the radio wave is reflected, a refractive mode in which the radio wave is refracted, a transmissive mode in which the radio wave is transmitted, and a blocking mode in which the radio wave is blocked. When the RIS control signal received from the gNB 200 includes the mode control information, the RIS-UE 100C (controller 130) controls the RIS apparatus 500B such that the RIS apparatus 500B operates in the operation mode indicated by the mode control information. Since the RIS control signal includes the mode control information, the gNB 200 can designate the operation mode of the RIS apparatus 500B via the RIS-UE 100C.

The RIS control signal may include direction control information to configure the propagation direction of the radio wave changed by the RIS apparatus 500B. The direction control information may be associated with the frequency control information (center frequency). The direction control information may be information configuring a reflection angle in the RIS apparatus 500B. The direction control information may be information configuring a refraction angle in the RIS apparatus 500B. Since the RIS control signal includes the direction control information, the gNB 200 can designate the propagation direction of the radio wave changed by the RIS apparatus 500B via the RIS-UE 100C.

As described above, the RIS-UE 100C (controller 130) controls the RIS apparatus 500B based on the RIS control signal from the gNB 200. This enables the gNB 200 to control the RIS apparatus 500B via the RIS-UE 100C.

### (7) Other Embodiments

In the above description, the frequency control information may include a cell ID identifying a cell and/or a BWP ID identifying a bandwidth part (BWP). The BWP is a part of a frequency band of a cell.

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed.

In the embodiment described above, an example in which the base station is an NR base station (i.e., a gNB) is described; however, the base station may be an LTE base station (i.e., an eNB). The base station may be a relay node such as an Integrated Access and Backhaul (IAB) node. The base station may be a Distributed Unit (DU) of the IAB node.

A program causing a computer to execute each of the processes performed by the UE 100 (NCR-UE 100B, RIS-UE 100C) or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 or the gNB 200 may be implemented as a semiconductor integrated circuit (chipset, system on a chip (SoC)).

The phrases "based on" and "depending on" used in the present disclosure do not mean "based only on" and "only depending on," unless specifically stated otherwise. The phrase "based on" means both "based only on" and "based at least in part on". The phrase "depending on" means both "only depending on" and "at least partially depending on". The terms "include", "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the scope as defined by the claims.

The present application claims priority to Japanese Patent Application No. 2022-030325 (filed on February 28, 2022).

### REFERENCE SIGNS

1: Mobile communication system
100: UE
100B: NCR-UE
110: Receiver
120: Transmitter
130: Controller
140: Interface
200: gNB
210: Transmitter
220: Receiver
230: Controller
240: Backhaul communicator
500A: NCR apparatus
500B: RIS apparatus
510A: Wireless unit
510a: Antenna unit
510b: RF circuit
510c: Directivity controller
520A: NCR controller
520B: RIS controller

## Claims

1. A communication method performed by a control terminal configured to control a relay apparatus, the relay apparatus being configured to relay radio waves between a base station (200) and a user equipment (100), the communication method comprising:
receiving from the base station (200) via an upper layer signaling at a layer higher than layer-2, association information associating two or more operation states of the relay apparatus with an identifier;
receiving a control signal via a layer-2 signaling from the base station (200), the control signal including the identifier;
identifying the two or more operation states associated with the identifier included in the received control signal; and
controlling the relay apparatus to apply the two or more operation states,
wherein the receiving the control signal comprises receiving the control signal in a time period prior to a time period during which the operation state designated in the control signal is applied, and one operation state of the two or more operation states is a beam pattern state of the relay apparatus.

2. The communication method according to claim 1, wherein the control signal comprises information designating an operation state of the relay apparatus for a respective time period of a plurality of time periods.

3. The communication method according to claim 1, further comprising receiving, from the base station (200), notification information for specifying the number of symbols during which the operation state designated in the control signal is applied, the symbols being time periods.

4. The communication method according to claim 3, wherein the receiving of the notification information comprises receiving the notification information in higher layer signaling of a layer higher than a layer of the signaling.

5. A control terminal for controlling a relay apparatus configured to relay radio waves between a base station (200) and a user equipment (100), the control terminal comprising:
a receiver (110) configured to
receive from the base station (200) via an upper layer signaling at a layer higher than layer-2, association information associating two or more operation states of the relay apparatus with an identifier, and
receive a control signal via a layer-2 signaling from the base station (200), the control signal including the identifier; and
a controller (130) configured to
identify the two or more operation states associated with the identifier included in the received control signal, and
control the relay apparatus to apply the two or more operation states,
wherein the receiver (110) is configured to receive the control signal in a time period prior to a time period during which the operation state designated in the control signal is applied, and one operation state of the two or more operation states is a beam pattern state of the relay apparatus.

6. A base station (200) wirelessly connected to a control terminal configured to control a relay apparatus, the relay apparatus being configured to relay radio waves between the base station (200) and a user equipment (100), the base station (200) comprising
a transmitter (210) configured to
transmit to the control terminal, via an upper layer signaling at a layer higher than layer-2, association information associating two or more operation states of the relay apparatus with an identifier, and
transmit to the control terminal, a control signal via a layer-2 signaling, the control signal including the identifier,
wherein the transmitter (210) is configured to transmit the control signal in a time period prior to a time period during which the operation state designated in the control signal is applied, and one operation state of the two or more operation states is a beam pattern state of the relay apparatus.

7. A computer program comprising instructions that, when the program is executed by a control terminal configured to control a relay apparatus, the relay apparatus being configured to relay radio waves between a base station (200) and a user equipment (100), cause the control terminal to carry out the method of claim 1.

8. A chipset for a control terminal configured to control a relay apparatus, the relay apparatus being configured to relay radio waves between a base station (200) and a user equipment (100), the chipset comprising means for carrying out the method of claim 1.

9. A system comprising:
a control terminal configured to control a relay apparatus, the relay apparatus being configured to relay radio waves between a base station (200) and a user equipment (100), wherein
the control terminal is configured to:
receive from the base station (200) via an upper layer signaling at a layer higher than layer-2, association information associating two or more operation states of the relay apparatus with an identifier;
receive a control signal via a layer-2 signaling from the base station (200), the control signal including the identifier;
control the relay apparatus to apply the operation state designated in the control signal to the relay apparatus; and
receive the control signal in a time period prior to a time period during which the operation state designated in the control signal is applied, wherein
one operation state of the two or more operation states is a beam pattern state of the relay apparatus.

## Patentansprüche

1. Kommunikationsverfahren, das von einem Steuerendgerät ausgeführt wird, das zum Steuern einer Relaisvorrichtung konfiguriert ist, wobei die Relaisvorrichtung konfiguriert ist, um Funkwellen zwischen einer Basisstation (200) und einer Benutzereinrichtung (100) weiterzuleiten, wobei das Kommunikationsverfahren aufweist:
Empfangen, von der Basisstation (200) über eine obere-Schicht-Signalisierung an einer Schicht, die höher als eine Schicht-2 ist, von Zuordnungsinformationen, die zwei oder mehr Betriebszustände der Relaisvorrichtung einer Kennung zuordnen,
Empfangen eines Steuersignals über eine Schicht-2-Signalisierung von der Basisstation (200), wobei das Steuersignal die Kennung aufweist,
Identifizieren der zwei oder mehr Betriebszustände, die der Kennung zugeordnet sind, die in dem empfangenen Steuersignal enthalten ist, und
Steuern der Relaisvorrichtung, um die zwei oder mehr Betriebszustände anzuwenden,
wobei das Empfangen des Steuersignals das Empfangen des Steuersignals in einer Zeitspanne vor einer Zeitspanne aufweist, während der der im Steuersignal festgelegte Betriebszustand angewendet wird, und wobei ein Betriebszustand der zwei oder mehr Betriebszustände ein Strahlmusterzustand der Relaisvorrichtung ist.

2. Kommunikationsverfahren gemäß Anspruch 1, wobei das Steuersignal Informationen aufweist, die einen Betriebszustand der Relaisvorrichtung für eine jeweilige Zeitspanne aus einer Mehrzahl von Zeitspannen festlegen.

3. Kommunikationsverfahren gemäß Anspruch 1, ferner aufweisend das Empfangen, von der Basisstation (200), von Benachrichtigungsinformationen zum Festlegen der Anzahl von Symbolen, während derer der im Steuersignal festgelegte Betriebszustand angewendet wird, wobei die Symbole Zeitspannen sind.

4. Kommunikationsverfahren gemäß Anspruch 3, wobei das Empfangen der Benachrichtigungsinformationen das Empfangen der Benachrichtigungsinformationen in einer höhere-Schicht-Signalisierung einer Schicht aufweist, die höher als eine Schicht der Signalisierung ist.

5. Steuerendgerät zum Steuern einer Relaisvorrichtung, die konfiguriert ist, um Funkwellen zwischen einer Basisstation (200) und einer Benutzereinrichtung (100) weiterzuleiten, wobei das Steuerendgerät aufweist:
einen Empfänger (110), der konfiguriert ist, um
von der Basisstation (200) über eine obere-Schicht-Signalisierung an einer Schicht, die höher als die Schicht-2 ist, Zuordnungsinformationen zu empfangen, die zwei oder mehr Betriebszustände der Relaisvorrichtung einer Kennung zuordnen, und
ein Steuersignal über eine Schicht-2-Signalisierung von der Basisstation (200) zu empfangen, wobei das Steuersignal die Kennung aufweist, und
eine Steuereinrichtung (130), die konfiguriert ist, um
die zwei oder mehr Betriebszustände zu identifizieren, die der in dem empfangenen Steuersignal enthaltenen Kennung zugeordnet sind, und
die Relaisvorrichtung zu steuern, um die zwei oder mehr Betriebszustände anzuwenden,
wobei der Empfänger (110) konfiguriert ist, um das Steuersignal in einer Zeitspanne vor einer Zeitspanne zu empfangen, während der der im Steuersignal festgelegte Betriebszustand angewendet wird, und wobei ein Betriebszustand der zwei oder mehr Betriebszustände ein Strahlmusterzustand der Relaisvorrichtung ist.

6. Basisstation (200), die drahtlos mit einem Steuerendgerät verbunden ist, das konfiguriert ist, um eine Relaisvorrichtung zu steuern, wobei die Relaisvorrichtung konfiguriert ist, um Funkwellen zwischen der Basisstation (200) und einer Benutzereinrichtung (100) weiterzuleiten, wobei die Basisstation (200) aufweist:
einen Sender (210), der konfiguriert ist, um
an das Steuerendgerät über eine obere-Schicht-Signalisierung an einer höheren Schicht als die Schicht-2 Zuordnungsinformationen zu übermitteln, die zwei oder mehr Betriebszustände der Relaisvorrichtung einer Kennung zuordnen, und
an das Steuerendgerät ein Steuersignal über eine Schicht-2-Signalisierung zu übermitteln, wobei das Steuersignal die Kennung aufweist,
wobei der Sender (210) konfiguriert ist, um das Steuersignal in einer Zeitspanne vor einer Zeitspanne zu übermitteln, während der der im Steuersignal festgelegte Betriebszustand angewendet wird, und wobei ein Betriebszustand der zwei oder mehr Betriebszustände ein Strahlmusterzustand der Relaisvorrichtung ist.

7. Computerprogramm, das Anweisungen aufweist, die, wenn das Programm von einem Steuerendgerät ausgeführt wird, das zum Steuern einer Relaisvorrichtung konfiguriert ist, wobei die Relaisvorrichtung konfiguriert ist, um Funkwellen zwischen einer Basisstation (200) und einer Benutzereinrichtung (100) weiterzuleiten, bewirken, dass das Steuerendgerät das Verfahren gemäß Anspruch 1 ausführt.

8. Chipsatz für ein Steuerendgerät, das zum Steuern einer Relaisvorrichtung konfiguriert ist, wobei die Relaisvorrichtung konfiguriert ist, um Funkwellen zwischen einer Basisstation (200) und einer Benutzereinrichtung (100) weiterzuleiten, wobei der Chipsatz Mittel zum Durchführen des Verfahrens gemäß Anspruch 1 aufweist.

9. System, aufweisend:
ein Steuerendgerät, das konfiguriert ist, um eine Relaisvorrichtung zu steuern, wobei die Relaisvorrichtung konfiguriert ist, um Funkwellen zwischen einer Basisstation (200) und einer Benutzereinrichtung (100) weiterzuleiten, wobei
das Steuerendgerät konfiguriert ist, um:
von der Basisstation (200) über eine obere-Schicht-Signalisierung an einer Schicht, die höher als eine Schicht-2 ist, Zuordnungsinformationen zu empfangen, die zwei oder mehr Betriebszustände der Relaisvorrichtung einer Kennung zuordnen,
ein Steuersignal über eine Schicht-2-Signalisierung von der Basisstation (200) zu empfangen, wobei das Steuersignal die Kennung aufweist,
die Relaisvorrichtung zu steuern, um den im Steuersignal festgelegte Betriebszustand auf die Relaisvorrichtung anzuwenden, und
das Steuersignal in einer Zeitspanne vor einer Zeitspanne zu empfangen, während der der im Steuersignal festgelegte Betriebszustand angewendet wird, wobei
ein Betriebszustand der zwei oder mehr Betriebszustände ein Strahlmusterzustand der Relaisvorrichtung ist.

## Revendications

1. Procédé de communication mis en œuvre par un terminal de commande configuré pour commander un dispositif de relais, ledit dispositif de relais étant configuré pour relayer des ondes radio entre une station de base (200) et un équipement utilisateur (100), le procédé de communication comprenant :
la réception, depuis la station de base (200) via une signalisation de couche supérieure à une couche supérieure à une couche-2, d'informations d'association associant deux ou plusieurs états de fonctionnement du dispositif de relais à un identifiant ;
la réception d'un signal de commande via une signalisation de couche-2 provenant de la station de base (200) le signal de commande comprenant l'identifiant ;
l'identification des deux ou plusieurs états de fonctionnement associés à l'identifiant inclus dans le signal de commande reçu ; et
la commande du dispositif de relais pour appliquer les deux ou plusieurs états de fonctionnement,
dans lequel la réception du signal de commande comprend la réception du signal de commande au cours d'une période de temps précédant une période de temps pendant laquelle l'état de fonctionnement désigné dans le signal de commande est appliqué, et un état de fonctionnement des deux ou plusieurs états de fonctionnement est un état de motif de faisceau du dispositif de relais.

2. Procédé de communication selon la revendication 1, dans lequel le signal de commande comprend des informations désignant un état de fonctionnement du dispositif de relais pour une période de temps respective parmi une pluralité de périodes de temps.

3. Procédé de communication selon la revendication 1, comprenant en outre la réception, depuis la station de base (200), d'informations de notification pour spécifier le nombre de symboles pendant lesquels l'état de fonctionnement désigné dans le signal de commande est appliqué, les symboles étant des intervalles périodes de temps.

4. Procédé de communication selon la revendication 3, dans lequel la réception des informations de notification comprend la réception desdites informations de notification dans une signalisation de couche supérieure d'une couche supérieure à une couche de la signalisation.

5. Terminal de commande pour commander un dispositif de relais configuré pour relayer des ondes radio entre une station de base (200) et un équipement utilisateur (100), le terminal de commande comprenant :
un récepteur (110) configuré pour
recevoir de la station de base (200), via une signalisation de couche supérieure à une couche supérieure à une couche-2, des informations d'association associant deux ou plusieurs états de fonctionnement du dispositif de relais à un identifiant, et
recevoir un signal de commande via une signalisation de couche-2 provenant de la station de base (200), le signal de commande comprenant l'identifiant ; et
un contrôleur (130) configuré pour
identifier les deux ou plusieurs états de fonctionnement associés à l'identifiant inclus dans le signal de commande reçu, et
commander le dispositif de relais pour appliquer les deux ou plusieurs états de fonctionnement,
dans lequel le récepteur (110) est configuré pour recevoir le signal de commande au cours d'une période de temps précédant une période de temps pendant laquelle l'état de fonctionnement désigné dans le signal de commande est appliqué, et un état de fonctionnement des deux ou plusieurs états de fonctionnement est un état de motif de faisceau du dispositif de relais.

6. Station de base (200) connectée sans fil à un terminal de commande configuré pour commander un dispositif de relais, le dispositif de relais étant configuré pour relayer des ondes radio entre la station de base (200) et un équipement utilisateur (100), la station de base (200) comprenant :
un transmetteur (210) configuré pour
transmettre au terminal de commande, via une signalisation de couche supérieure à une couche supérieure à une couche-2, des informations d'association associant deux ou plusieurs états de fonctionnement du dispositif de relais à un identifiant, et
transmettre au terminal de commande un signal de commande via une signalisation de couche-2, le signal de commande comprenant l'identifiant,
dans lequel le transmetteur (210) est configuré pour transmettre le signal de commande au cours d'une période de temps précédant une période de temps pendant laquelle l'état de fonctionnement désigné dans le signal de commande est appliqué, et un état de fonctionnement des deux ou plusieurs états de fonctionnement est un état de motif de faisceau du dispositif de relais.

7. Programme informatique comprenant des instructions qui, lorsque le programme est exécuté par un terminal de commande configuré pour commander un dispositif de relais, le dispositif de relais étant configuré pour relayer des ondes radio entre une station de base (200) et un équipement utilisateur (100), amènent le terminal de commande à mettre en œuvre le procédé selon la revendication 1.

8. Jeu de puces pour un terminal de commande configuré pour commander un dispositif de relais, le dispositif de relais étant configuré pour relayer des ondes radio entre une station de base (200) et un équipement utilisateur (100), le jeu de puces comprenant des moyens pour mettre en œuvre le procédé selon la revendication 1.

9. Système comprenant :
un terminal de commande configuré pour commander un dispositif de relais, le dispositif de relais étant configuré pour relayer des ondes radio entre une station de base (200) et un équipement utilisateur (100), dans lequel
le terminal de commande est configuré pour :
recevoir de la station de base (200), via une signalisation de couche supérieure à une couche supérieure à la couche-2, des informations d'association associant deux ou plusieurs états de fonctionnement du dispositif de relais à un identifiant ;
recevoir un signal de commande via une signalisation de couche-2 provenant de la station de base (200), le signal de commande comprenant l'identifiant ;
commander le dispositif de relais pour appliquer l'état de fonctionnement désigné dans le signal de commande au dispositif de relais ; et
recevoir le signal de commande au cours d'une période de temps précédant une période de temps pendant laquelle l'état de fonctionnement désigné dans le signal de commande est appliqué, dans lequel
un état de fonctionnement des deux ou plusieurs états de fonctionnement est un état de motif de faisceau du dispositif de relais.
